# EUROPÄISCHE PATENTSCHRIFT

(11) **EP 3 060 412 B1**
(45) Veröffentlichungstag und Bekanntmachung des Hinweises auf die Patenterteilung: **27.06.2018**
(21) Anmeldenummer: 14789551.0
(22) Anmeldetag: 23.10.2014
(51) Int. Cl.: B60C 1/00, C08C 19/20, C08K 3/36, C08L 9/00, C08L 15/00

(54) **KAUTSCHUKZUSAMMENSETZUNG**
RUBBER COMPOUND
COMPOSITION DE CAOUTCHOUC

(30) Priorität: 24.10.2013 EP 13190166
(43) Veröffentlichungstag der Anmeldung: 31.08.2016
(73) Patentinhaber: ARLANXEO Deutschland GmbH, 41540 Dormagen (DE)
(72) Erfinder: HARDY, David John, NL-2353 MS Leiderdorp (NL); KLOPPENBURG, Heike, 40625 Düsseldorf (DE); LUCASSEN, Alex, NL-7597 NE Sassveld (NL); STEINHAUSER, Norbert, 41539 Dormagen (DE); ZHANG, Yan, 51375 Leverkusen (DE)
(74) Vertreter: Wichmann, Birgid
(86) Internationale Anmeldenummer: PCT/EP2014/072778
(87) Internationale Veröffentlichungsnummer: WO 2015/059237

(56) Entgegenhaltungen:
- EP-A1- 2 530 095
- WO-A1-2009/034001
- US-A1- 2009 156 751
- US-A1- 2010 186 859
- US-A1- 2011 136 956
- US-A1- 2011 282 001
- US-A1- 2012 024 441
- US-A1- 2012 029 114
- US-A1- 2012 041 129
- US-A1- 2012 309 891
- US-A1- 2013 340 909

## Beschreibung

Die Erfindung betrifft vulkanisierbare Kautschukzusammensetzungen und hieraus hergestellte Vulkanisate, die sich für die Herstellung von Reifen, Reifenlaufflächen oder Reifenteilen eignen.

Bei Reifen oder Reifenlaufflächen werden als wichtige Eigenschaften eine gute Haftung auf trockener und nasser Oberfläche, ein geringer Rollwiderstand sowie ein hoher Abriebwiderstand angestrebt. Dabei ist es sehr schwer, die Rutschfestigkeit eines Reifens zu verbessern, ohne gleichzeitig den Rollwiderstand und die Abriebbeständigkeit zu verschlechtern. Ein niedriger Rollwiderstand ist für einen niedrigen Kraftstoffverbrauch von Bedeutung, und eine hohe Abriebbeständigkeit ist der entscheidende Faktor für eine hohe Laufleistung des Reifens.

Nassrutschfestigkeit und Rollwiderstand einer Reifenlauffläche hängen zum großen Teil von den dynamisch-mechanischen Eigenschaften der Kautschuke ab, die bei der Mischungsherstellung verwendet werden. Zur Erniedrigung des Rollwiderstands werden für die Reifenlauffläche Kautschuke mit einer hohen Rückprallelastizität bei höheren Temperaturen (60°C bis 100°C) eingesetzt. Andererseits sind zur Verbesserung der Nassrutschfestigkeit Kautschuke mit einem hohen Dämpfungsfaktor bei niedrigen Temperaturen (0 bis 23°C) bzw. niedriger Rückprallelastizität im Bereich 0°C bis 23°C von Vorteil. Um dieses komplexe Anforderungsprofil zu erfüllen, werden Mischungen aus verschiedenen Kautschuken in der Lauffläche eingesetzt. Für gewöhnlich werden Mischungen aus einem oder mehreren Kautschuken mit einer relativ hohen Glasübergangstemperatur, wie Styrol-Butadien-Kautschuk, und einem oder mehreren Kautschuken mit relativ niedriger Glasübergangstemperatur, wie Polybutadien mit einem hohen 1,4-cis-Gehalt bzw. einem Styrol-Butadien-Kautschuk mit niedrigem Styrol- und geringem Vinylgehalt oder einem in Lösung hergestellten Polybutadien mit mittlerem 1,4-cis- und niedrigem Vinylgehalt verwendet.

Doppelbindungshaltige anionisch polymerisierte Lösungskautschuke, wie Lösungs-Polybutadien und Lösungs-Styrol-Butadien-Kautschuke, besitzen gegenüber entsprechenden Emulsionskautschuken Vorteile bei der Herstellung rollwiderstandsarmer Reifenlaufflächen. Die Vorteile liegen unter anderem in der Steuerbarkeit des Vinylgehalts und der damit verbundenen Glasübergangstemperatur und der Molekülverzweigung. Hieraus ergeben sich in der praktischen Anwendung besondere Vorteile in der Relation von Nassrutschfestigkeit und Rollwiderstand des Reifens. Wesentliche Beiträge zur Energiedissipation und somit zum Rollwiderstand in Reifenlaufflächen resultieren aus freien Polymerkettenenden und aus dem reversiblen Auf- und Abbau des Füllstoffnetzwerks, welches der in der Reifenlaufflächenmischung eingesetzte Füllstoff (zumeist Kieselsäure und/oder Ruß) ausbildet.

Zur Herstellung von Reifen bzw. Reifenlaufflächen mit verringertem Rollwiderstand werden üblicherweise Füllstoffe als Verstärkungsmittel, wie etwa polysulfidische Silane, Ruße oder Kieselsäure (Silica) eingesetzt. Nachteilig bei der Verwendung von funktionalisierten Lösungs-Styrol-Butadien-Kautschuken und Kieselsäure als Verstärkungsmittel zur Herstellung von Reifen, Reifenlaufflächen oder Reifenteilen ist jedoch, dass die Kautschukmischung aufgrund einer erhöhten Polymer-Füllstoff-Wechselwirkung und zugleich einer verringerten Füllstoff-Füllstoff-Wechselwirkung sehr elastisch wird, was für die Verarbeitbarkeit der Kautschukmischung während der Extrusion oder des Kalandrierens ein Problem darstellt. Insbesondere zeigt sich diese Auswirkung in der rauen Oberflächenstruktur der Vulkanisate. Dies hat zur Folge, dass im Fertigungsprozess die Gewichtskontrolle erschwert wird.

Zur Verbesserung der Verarbeitbarkeit von kieselsäurehaltigen Kautschukmischungen wurden beispielsweise Zusatzstoffe vorgeschlagen, wie Fettsäureester, Fettsäuresalze oder Mineralöle. Die genannten Zusatzstoffe besitzen den Nachteil, dass sie die Fließfähigkeit erhöhen, gleichzeitig aber die Spannungswerte bei größerer Dehnung (z.B. 100% bis 300%) oder auch die Härte der Vulkanisate vermindern, so dass die verstärkende Wirkung des Füllstoffes Einbuße erleidet. Eine zu geringe Härte oder Steifigkeit des Vulkanisats resultiert aber in einem unbefriedigenden Fahrverhalten des Reifens besonders in Kurven.

US 2012/029114 A1 beschreibt Reifen aus einem Gummi. Derartige Reifen umfassen eine Komponente, die Siliziumdioxid-verstärkte Gummizusammensetzung umfassend spezielle Polybutadien-Kautschuke, funktionalisierte Styrol/Butadien Elastomere und cis-1,4-Polyisopren Kautschuk aufweist.

EP 2 530 095 A1 beschreibt Luftreifen mit einer Umfangslauffläche in Form einer Kappe / Basis mit einer äußeren Laufflächenkappen-Gummischicht, umfassend eine Reifenlauffläche und eine Laufflächenbasis-Gummischicht, wobei die Laufflächenbasis-Gummischicht zumindest teilweise oder vollständig unter der äußeren Laufflächenkappen-Gummischicht liegt. Die Kautschukzusammensetzung des äußeren Laufflächenkappengummis umfasst, bezogen auf Gewichtsteile pro 100 Gewichtsteile des Laufflächenkautschuks (phr), (A) 55 bis 85 phr cis-1,4-Polybutadienkautschuk und (B) 45 bis 15 phr mindestens eines zusätzlichen dienbasierten Elastomers, einschließlich cis-1,4-Polyisoprenkautschuk, (C) 40 bis 110 phr eines verstärkenden Füllstoffs, wobei der verstärkende Füllstoff eine Kombination aus einem verstärkenden Kautschukruß und Siliciumdioxid ist, wobei der verstärkende Füllstoff umfasst: (1) 20 bis 60 phr Kautschukverstärkungsruß und (2) 10 bis 80 phr Kieselsäure; und (D) ein Kupplungsmittel mit einer mit Hydroxylgruppen reaktiven Gruppierung an der Kieselsäure und einer anderen, mit Kohlenstoff-Kohlenstoff-Doppelbindungen wechselwirkenden Gruppierung des cis-1,4-Polybutadienkautschuks.

US 2012/309891 A1 beschreibt pneumatische Gummireifen, die für Hochleistungszwecke vorgesehen sind und eine kappen- / basiskonfigurierte Lauffläche mit einer kieselsäurehaltigen speziellen cis-1,4-Polybutadienkautschuk-reichen Laufflächenkappen-Gummischicht aufweisen. Die Gummizusammensetzung des äußeren Laufflächenkappen-Gummis basiert auf den folgenden Gewichtsteilen pro 100 Gewichtsteile des Laufflächenkautschuks (phr), (A) etwa 55 bis etwa 85 phr spezialisierter cis-1,4-Polybutadienkautschuk und (B) etwa 45 bis etwa 15 phr von mindestens einem zusätzlichen Dien-basierten Elastomer, einschließlich cis-1,4-Polyisopren-Kautschuk, wobei der spezielle cis-1,4-Polybutadien-Kautschuk eine Mikrostruktur aufweist, die etwa 96 bis etwa 99% cis-1,4-isomere Einheiten umfasst, ein zahlenmittleres Molekulargewicht (Mn) in einem Bereich von etwa 150.000 bis etwa 200.000 und einem Heterogenitätsindex (Mw / Mn) in einem Bereich von etwa 1,5 / 1 bis etwa 2,1 / 1, (B) etwa 40 bis etwa 110 phr Verstärkungsfüllstoff, wobei der verstärkende Füllstoff eine Kombination von Kautschuk verstärkenden Ruß und aromatischer amorpher Kieselsäure (Fällungskieselsäure) ist, bestehend aus: (1) etwa 20 bis etwa 60 phr Kautschukverstärkungsruß und (2) etwa 10 bis etwa 80 phr Fällungskieselsäure; und (C) Kopplungsmittel mit einer mit Hydroxylgruppen reaktiven Gruppierung an der Fällungskieselsäure und einer anderen, mit Kohlenstoff-Kohlenstoff-Doppelbindungen wechselwirkenden Gruppierung des cis-1,4-Polybutadienkautschuks.

US 2011/136956 A1 offenbart 1,4-Polybutadien, das mit einer aromatischen Organoschwefelverbindung funktionalisiert ist. Es wird eine verbesserte Verarbeitbarkeit aufgrund verminderter Mooney-Viskosität und ein verbessertes Gefühl beim Schlagen und Fliegen aufgrund verringerter Kompression und erhöhter Restitution bei der Herstellung eines Golfballkerns erreicht. Ferner ist eine Zusammensetzung zur Herstellung eines Golfballkerns einschließlich derselben offenbart.

US 2009/156751 A1 betrifft ein Herstellungsverfahren für ein aromatisches organoschwefelfunktionalisiertes 1,4-cis-Polybutadien, umfassend: Polymerisieren von 1,3-Butadien oder Butadienderivat in Gegenwart eines spezifischen Katalysators in einem unpolaren Lösungsmittel, um 1,4-cis-Polybutadien herzustellen; und Umsetzen des resultierenden Polybutadiens mit einer aromatischen Organoschwefelverbindung. Ein solches hergestelltes aromatisches Organoschwefel-funktionalisiertes 1,4-cis-Polybutadien weist keine Region mit ultrahohem Molekulargewicht auf und hat somit eine enge Molekulargewichtsverteilung.

US 2010/186859 A1 beschreibt pneumatische Gummireifen mit einer äußeren Umfangslauffläche, die aus einer cis-1,4-Polybutadien-reichen und Silica-reichen Gummizusammensetzung besteht, die spezifizierte Elastomere mit räumlich definierten Glasübergangstemperaturen in Verbindung mit Silica und spezifizierter Rußverstärkung enthält.

US 2012/041129 A1 betrifft silanhaltige Kautschukmischungen mit gegebenenfalls funktionalisierten Dienkautschuken und Mikrogelen, ein Verfahren zu deren Herstellung sowie deren Verwendung zur Herstellung von nasslauffesten und rollwiderstandsarmen Kraftfahrzeugreifenlaufflächen mit hoher Abriebfestigkeit. Die Kautschukmischungen, enthalten (A) mindestens einen gegebenenfalls funktionalisierten Dienkautschuk mit einer Polymerkette aus Wiederholungseinheiten basierend auf mindestens einem Dien und gegebenenfalls einem oder mehreren vinylaromatischen Monomeren und (B) gegebenenfalls einem Styrol / Butadien-Kautschukgel mit einem Quellungsindex in Toluol von 1 bis 25 und mit einer Partikelgröße von 5 bis 1000 nm sowie (C) ein definiertes Silan.

US2011/282001 A1 betrifft funktionalisierte Dienkautschuke und ihre Herstellung, Kautschukmischungen, die diese funktionalisierten Dienkautschuke enthalten, sowie deren Verwendung zur Herstellung von Kautschukvulkanisaten, die insbesondere zur Herstellung von hochverstärkten Kautschukformkörpern dienen. Besonders bevorzugt ist die Verwendung von Reifen mit besonders geringem Rollwiderstand und besonders hoher Nass- und Abriebfestigkeit. Die funktionalisierten Dienkautschuke werden erhalten durch Polymerisation von Dienen und gegebenenfalls vinylaromatischen Monomeren in einem Lösungsmittel und anschließende Umsetzung mit Hydroxymercaptanen der Formel: HS-R-OH, worin R für eine lineare, verzweigte oder cyclische C1-C36- Alkylen- oder - Alkenylengruppe oder eine Arylgruppe steht, wobei jede dieser Gruppen eine weitere Hydroxygruppe als Substituenten aufweist und gegebenenfalls durch Stickstoff-, Sauerstoff- oder Schwefelatome unterbrochen sein kann und gegebenenfalls Arylsubstituenten aufweist.

US 2012/024441 A1 beschreibt einen Luftreifen, der eine Gummilauffläche mit einer Kappe / Basis-Konstruktion aufweist, die aus einer äußeren Laufflächenkappenschicht mit einer äußeren Lauffläche und einer darunterliegenden Laufflächengrundschicht besteht, wobei die Laufflächenkappenschicht aus mehreren von umlaufenden, länglichen Gummiraupenkappenzonen mit abgestuften physikalischen Eigenschaften besteht, wobei sich die Laufstreifenkappenzonen einzeln von der Laufstreifenkappenlauffläche radial nach innen zur Laufstreifengrundschicht erstrecken, wobei die Laufstreifenkappenzonen aus zwei primären Laufstreifenkappenzonen und einer zentralen Laufstreifenkappenzone bestehen. Die zentrale Laufflächenkappenzone umfasst eine vulkanisierbare Kautschukzusammensetzung, die basierend auf 100 Gewichtsteilen Elastomer (phr) (A1) von etwa 60 bis etwa 90 phr eines emulsions- oder lösungspolymerisierten Styrol-Butadien-Kautschuks mit einem Styrolgehalt von etwa 20 bis etwa 40 Gewichtsprozent und einem Tg von etwa -55 ° C bis etwa -20 ° C; (A2) von etwa 40 bis etwa 10 phr eines Polybutadiens mit einem cis 1, 4-Gehalt von mindestens 90%, einem zahlenmittleren Molekulargewicht (Mn) von mehr als 175.000 und einem Heterogenitätsindex (Mw / Mn) von weniger als 2,5; (A3) von etwa 50 bis etwa 150 phr Siliciumdioxid; wobei die primären Laufstreifenkappenzonen eine vulkanisierbare Kautschukzusammensetzung umfassen, die basierend auf 100 Gewichtsteilen Elastomer (phr) (B1) von etwa 60 bis etwa 90 phr eines lösungspolymerisierten Styrol-Butadien-Kautschuks, der mit einer Alkoxysilangruppe funktionalisiert ist, und mindestens eine funktionelle Gruppe umfasst, ausgewählt aus der Gruppe bestehend aus primären Aminen und Thiolen; (B2) etwa 40 bis etwa 10 phr Polybutadien mit einer Mikrostruktur, die etwa 96 bis etwa 99% cis-1,4-isomere Einheiten, etwa 0,1 bis etwa 1% trans-1,4-isomere Einheiten und von etwa 1 bis etwa 3 % Vinyl-1,2-isomere Einheiten umfasst; ein Zahlenmittel des Molekulargewichts (Mn) in einem Bereich von etwa 75.000 bis etwa 150.000 und einen Heterogenitätsindex (Mw / Mn) in einem Bereich von etwa 3/1 bis etwa 5/1; und (B3) etwa 50 bis etwa 150 phr Siliciumdioxid.

Es ist daher die Aufgabe der Erfindung, vulkanisierbare Kautschukzusammensetzungen bereitzustellen, die ein gutes Verarbeitungsverhalten bei der Herstellung von Reifen, Reifenlaufflächen oder Reifenteilen aufweisen, wobei die Reifen, Reifenlaufflächen oder Reifenteile keine Einbuße in ihrer dynamischen-mechanischen Eigenschaften, insbesondere im Hinblick auf Rollwiderstand, Nassrutschfestigkeit und/oder mechanische Festigkeit, erleiden.

Es wurde überraschend gefunden, dass dieses Ziel mit vulkanisierbaren Kautschukzusammensetzungen enthaltend mindestens die folgenden Komponenten
a) mindestens ein funktionalisiertes Polymer,
b) mindestens ein modifiziertes Polybutadien mit einem Anteil an cis-1,4-Einheiten von > 95 Gew.-% und einem 1,2-Vinyl-Gehalt von < 1 Gew.- %, wobei das Polybutadien nach der Polymerisation mittels Schwefelchloriden modifiziert wurde,
c) mindestens eine Kieselsäure,
d) mindestens einen weiteren Füllstoff,
e) mindestens ein Vulkanisationsmittel,
f) mindestens ein Öl und
g) ggf. mindestens ein weiteres Kautschukadditiv, wobei
das modifizierte Polybutadien eine sprungartige Erhöhung der Mooney-Viskosität (ML 1+4 bei 100 °C) um mindestens 50%, bezogen auf die Mooney-Viskosität (ML 1+4 bei 100 °C) des Polybutadiens vor der Zugabe der Schwefelchloride, aufweist,
erreicht wird.

### Beschreibung der Figuren

**Figur 1** zeigt die grafische Auswertung des Thermogramms der 2. Aufheizung durch Anlegen von drei Geraden zur Bestimmung der Glasübergangstemperatur der Kautschuke. Die Glasübergangstemperatur Tg wird als Mittelpunktstemperatur der Schnittpunkte Y und Z erhalten. Die experimentelle Durchführung der DSC Methode wird im weiteren Verlauf dieser Anmeldung detailliert beschrieben.
**Figur 2** umfasst eine grafische Darstellung der Werte für den Steifigkeitsindex (SI) sowie den Rollwiderstandsindex (RRI), welche für die Beispiele 1 bis 10 bestimmt wurden.
**Figur 3** zeigt Garvey-Die-Profile der Extrudate aus Vulkanisaten gemäß den Beispielen 1-4 (Nummerierung gemäß Tabelle 6 der Beispiele) hergestellt bei 100°C.
**Figur 4** zeigt Garvey-Die-Profile der Extrudate aus Vulkanisaten gemäß den Beispielen 1-4 (Nummerierung gemäß Tabelle 6 der Beispiele) hergestellt bei 120°C.
**Figur 5** zeigt Garvey-Die-Profile der Extrudate aus Vulkanisaten gemäß den Beispielen 1, 2, 5 und 6 (Nummerierung gemäß Tabelle 6 der Beispiele) hergestellt bei 90°C.
**Figur 6** zeigt Garvey-Die Profile von Extrudaten aus Vulkanisaten gemäß den Beispielen 7 und 8 (Nummerierung gemäß Tabelle 6) hergestellt bei 100°C bzw. 120°C.

Es konnte festgestellt werden, dass durch den Zusatz von modifizierten Polybutadienen (Komponente b) die Fließfähigkeit von Kautschukzusammensetzungen positiv beeinflusst wird und zu Vulkanisaten mit gutem dynamischen Verhalten und deutlich erhöhter Härte/Steifigkeit führt, was bei der Verarbeitbarkeit von Reifen, Reifenlaufflächen oder Reifenteilen besonders wichtig ist.

### Komponente a):

Vorzugsweise handelt es sich bei dem funktionalisierten Polymer um funktionalisierte Dienpolymere oder durch Copolymerisation von Dienen mit vinylaromatischen Monomeren erhältliche Dien-Copolymere. Besonders bevorzugt ist das funktionalisierte Polymer ein Polybutadien, ein Polyisopren, ein Butadien-Isopren-Copolymer, ein Butadien-Styrol-Copolymer (SSBR), ein Isopren-Styrol-Copolymer oder ein Butadien-Isopren-Styrol-Terpolymer.

Soweit es sich bei dem als Komponente a) verwendeten funktionalisierten Polymer um ein modifiziertes Polybutadien handelt, muss dieses verschieden von Komponente b) sein.

Insbesondere bevorzugt wird als Komponente a) mindestens en Butadien-Styrol-Copolymer (SSBR) eingesetzt. Unter SSBR versteht man Kautschuke, die in einem Lösungsprozess auf der Basis von Vinylaromaten und Dienen, bevorzugt konjugierten Dienen hergestellt werden (**H. L. Hsieh, R. P. Quirk,** Marcel Dekker Inc. New York-Basel 1996, S. 447-469; Houben-Weyl, Methoden der Organischen Chemie, Thieme Verlag, Stuttgart, 1987, Band E 20, Seiten 114 bis 134; Ullmann's Encyclopedia of Industrial Chemistry, Vol. A 23, Rubber 3. Synthetic, VCH Verlagsgesellschaft mbH, D-69451 Weinheim, 1993, S. 240-364).

Geeignete vinylaromatische Monomere sind Styrol, o-, m- und p- Methylstyrol, technische Methylstyrolgemische, p-tert.-Butylstyrol, α-Methylstyrol, p-Methoxystyrol, Vinylnaphthalin, Divinylbenzol, Trivinylbenzol und Divinylnaphthalin. Bevorzugt ist Styrol. Der Gehalt an einpolymerisiertem Vinylaromat liegt bevorzugt im Bereich von 5 bis 50 Gew.-%, besonders bevorzugt im Bereich von 10 bis 40 Gew.-%. Geeignete Diolefine sind 1,3-Butadien, Isopren, 1,3-Pentadien, 2,3-Dimethylbutadien, 1-Phenyl-1,3-butadien und 1,3-Hexadien. Bevorzugt sind 1,3-Butadien und Isopren. Der Gehalt an einpolymerisierten Dienen liegt im Bereich von 50 bis 95 Gew. %, bevorzugt im Bereich von 60 bis 90 Gew. %. Der Gehalt an Vinylgruppen im einpolymerisierten Dien liegt im Bereich von 10 bis 90 %, der Gehalt an 1,4-trans-ständigen Doppelbindungen liegt im Bereich von 10 bis 80 % und der Gehalt an 1,4-cis ständigen Doppelbindungen ist komplementär zur Summe aus Vinylgruppen und 1,4-trans-ständigen Doppelbindungen. Der Vinylgehalt des SSBR beträgt vorzugsweise > 10 %.

Üblicherweise sind die polymerisierten Monomeren und die unterschiedlichen Dien-Konfigurationen statistisch im Polymeren verteilt.

Die Herstellung dieser Vinylaromat/Dien-Kautschuke als **Kautschukkomponente a)** für die erfindungsgemäßen Kautschukmischungen erfolgt insbesondere durch anionische Lösungspolymerisation, d. h. mittels eines Katalysators auf Alkali- oder Erdalkalimetallbasis in einem organischen Lösungsmittel.

Die in Lösung polymerisierten Vinylaromat/Dien-Kautschuke besitzen Mooney-Viskositäten (ML 1+4 bei 100°C) im Bereich von 20 bis 150 Mooney-Einheiten (MU), vorzugsweise im Bereich von 30 bis 100 Mooney-Einheiten. Insbesondere die hochmolekularen SSBR-Typen mit Mooney-Viskositäten von > 80 MU können Öle in Mengen von 30 bis 100 Gew.-Teile bezogen auf 100 Gew.-Teile Kautschuk enthalten. Ölfreie SSBR-Kautschuke weisen Glasübergangstemperaturen im Bereich von -70°C bis -10° C auf, bestimmt durch Differentialthermoanalyse (DSC).

SSBR kann sowohl linear als auch verzweigt oder endgruppenmodifiziert sein. Beispielsweise sind derartige Typen in DE 2 034 989 C2 und JP-A-56-104 906 genannt. Als Verzweigungsmittel wird bevorzugt Siliciumtetrachlorid oder Zinntetrachlorid eingesetzt.

Die Einführung funktioneller Gruppen an den Polymerkettenenden und/oder an den Polymerkettenanfängen ermöglicht eine physikalische oder chemische Anbindung dieser Polymerkettenenden bzw. -anfänge an die Füllstoffoberfläche. Dadurch wird deren Beweglichkeit eingeschränkt und somit die Energiedissipation bei dynamischer Beanspruchung der Reifenlauffläche verringert. Gleichzeitig können diese funktionellen Gruppen die Dispergierung des Füllstoffes in der Reifenlauffläche verbessern, was zu einer Schwächung des Füllstoffnetzwerkes und damit zu einer weiteren Absenkung des Rollwiderstandes führen kann.

Zu diesem Zweck sind zahlreiche Methoden zur Endgruppenmodifizierung entwickelt worden. Beispielsweise wird in der EP0180141A1 die Verwendung von 4,4'-Bis(dimethyl-amino)benzophenon oder N-Methylcaprolactam als Funktionalisierungsreagenzien beschrieben. Auch die Verwendung von Ethylenoxid und N-Vinylpyrrolidon ist aus EP0864606A1 bekannt. Eine Reihe weiterer möglicher Funktionalisierungsreagenzien sind in US4417029 aufgeführt. Methoden zur Einführung von funktionellen Gruppen an den Polymerkettenanfängen mittels funktioneller anionischer Polymerisationsinitiatoren sind zum Beispiel in EP0513217A1 und EP0675140A1 (Initiatoren mit geschützter Hydroxylgruppe), US20080308204A1 (Thioether enthaltende Initiatoren) sowie in US5792820**,** EP0590490A1 und EP0594107A1 (Alkaliamide von sekundären Aminen als Polymerisationsinitiatoren) beschrieben.

Die Carboxygruppe als stark polarer, zweizähniger Ligand kann besonders gut mit der Oberfläche des Silikafüllstoffes in der Kautschukmischung wechselwirken. Methoden zur Einführung von Carboxygruppen entlang der Polymerkette von in Lösung hergestellten Dienkautschuken sind bekannt und beispielsweise beschrieben in DE2653144A1**,**

EP1000971A1**,** EP1050545A1**,** WO2009034001A1**.** Die Einführung von Carboxygruppen an den Kettenenden von Dienkautschuken ist ebenfalls beschrieben, so zum Beispiel in US3242129 oder US4465809 durch Umsetzung der anionischen Polymerkettenenden mit CO₂.

Insbesondere Silane und Cyclosiloxane mit in der Summe mindestens zwei Halogen- und/oder Alkoxy- und/oder Aryloxysubstituenten an Silicium eignen sich gut zur Endgruppenfunktionalisierung von Dienkautschuken, da einer der genannten Substituenten am Si-Atom leicht in einer schnellen Substitutionsreaktion durch ein anionisches Dienpolymerkettenende ausgetauscht werden kann und der bzw. die weiteren der zuvor genannten Substituenten an Si als funktionelle Gruppe zur Verfügung steht, welche, gegebenenfalls nach Hydrolyse, mit dem Füllstoff der Reifenlaufflächenmischung wechselwirken kann. Beispiele für derartige Silane finden sich in US3244664**,** US4185042**,** EP0778311A1 und US20050203251A1**.**

WO2012/065908A1 beschreibt 1-Oxa-2-silacycloalkane als Funktionalisierungs-reagenzien zur Einführung von Hydroxyendgruppen an Dienpolymeren. Diese 1-Oxa-2-silacycloalkane weisen die Nachteile der im vorigen Absatz beschriebenen Silane, wie Reaktion mehrerer anionischer Polymerkettenenden pro Silan-Molekül, Abspaltung störender Komponenten und Kopplung unter Ausbildung von Si-O-Si-Bindungen bei der Aufarbeitung und Lagerung, nicht auf.

Alle aus dem Stand der Technik bekannten funktionalisierten Polymere können für die erfindungsgemäße Kautschukzusammensetzung eingesetzt werden.

Als funktionalisiertes Polymer kommt bevorzugt ein durch Lösungspolymerisation hergestelltes endgruppenfunktionalisiertes Butadien-Styrol-Copolymer (endgruppenfunktionalisierte SSBR) zum Einsatz. Vorzugsweise handelt es sich bei den funktionellen Gruppen um Hydroxyl- und/oder Carboxyl-, Siloxygruppen. In einer Ausführungsform handelt es sich bei den funktionellen Gruppen um Hydroxyl- und/oder Carboxyl- und/oder Siloxygruppen.

Vorzugsweise weist das endgruppenfunktionalisierte Butadien-Styrol-Copolymer für die erfindungsgemäße Kautschukzusammensetzung Mooney-Viskositäten (ML 1+4 bei 100°C) von 10 bis 200, vorzugsweise 30 bis 150 Mooney-Einheiten und mittlere Molgewichte (Zahlenmittel, Mₙ) von 10.000 bis 2.000.000 g/mol, bevorzugt von 100.000 bis 1 .000.000 g/mol auf.

Für die erfindungsgemäße vulkanisierbare Kautschukzusammensetzung weist das endgruppenfunktionalisierte Butadien-Styrol-Copolymer vorzugsweise Glasübergangstemperaturen von -110°C bis +20°C, bevorzugt -110°C bis 0°C auf.

Polybutadiene werden als wichtige Bestandteile von Kautschukmischungen in der Reifenindustrie eingesetzt, wobei eine Verbesserung der Endeigenschaften, wie etwa eine Reduktion des Rollwiderstandes und des Abriebes gewünscht wird. Ein weiteres Anwendungsfeld sind Golfballkerne oder Schuhsohlen, wobei hier eine hohe Rückprallelastizität im Vordergrund steht. Polybutadiene mit einem hohen Anteil an cis-1,4-Einheiten werden seit längerer Zeit in großem technischen Maßstab produziert und für die Herstellung von Reifen und anderen Gummiwaren sowie zur Schlagzähmodifizierung von Polystyrol eingesetzt.

Zur Erzielung hoher Anteile an cis-1,4-Einheiten werden derzeit fast ausschließlich Katalysatoren auf Basis von Verbindungen der Seltenen Erden eingesetzt, wie beispielsweise in EP-A 1 0 011 184 und EP-A1 0 007 027 beschrieben.

Aus dem Stand der Technik ist bekannt, dass speziell Neodym-katalysierte Polybutadiene in der Gruppe der hoch-cis-Polybutadiene besonders vorteilhafte Eigenschaften hinsichtlich Rollwiderstand, Abrieb und Rückprallelastizität aufweisen. Bei der Herstellung von Polybutadienen spielen die eingesetzten Katalysatorsysteme eine wichtige Rolle.

Der technisch eingesetzte Neodymkatalysator beispielsweise ist ein Ziegler/Natta-System, das aus mehreren Katalysatorkomponenten gebildet wird. Bei der Katalysatorbildung werden meist unterschiedliche Katalysatorzentren gebildet, die sich im Polymer anhand einer mindestens bimodalen Molmassenverteilung erkennen lassen. Im Ziegler/Natta-Katalysatorsystem werden die bekannten 3 Katalysatorkomponenten, meist bestehend aus einer Neodymquelle, einer Chloridquelle und einer Aluminiumorganischen Verbindung in verschiedenster Art und Weise unter bestimmten Temperaturbedingungen vermischt, wobei das Katalysatorsystem mit oder ohne Alterung für die Polymerisation vorbereitet wird.

Aus dem Stand der Technik sind mehrere Herstellungsverfahren für Ziegler/Natta-Katalysatorsysteme bekannt, welche zur Herstellung von Polybutadienen eingesetzt werden.

Die EP 0 127 236 beschreibt beispielsweise ein Verfahren, in dem der Katalysator durch die Vermischung von Neodymoxiden, Neodymalkoholaten und Carboxylaten mit Organometallhalogeniden sowie einer organischen Verbindung bei einer Temperatur von 20°C bis 25°C hergestellt wird. Es ist auch möglich, die Vermischung dieser vier Komponenten bei 50°C bis 80°C durchzuführen. Bei dieser Variante wird die Mischung auf 20 bis 25°C abgekühlt, sodann wird DIBAH zugefügt.

Aus EP 1 176 157 B1 ist ein Verfahren zur Herstellung von Polybutadienen mit verringertem Verhältnis Lösungsviskosität/Mooney-Viskosität bekannt, in dem die Katalysatorherstellung mit Präformierung durchgeführt wird. Dabei wird zunächst das Neodymversatat mit DIBAH und Isopren bei 50°C vermischt, anschließend wird diese Mischung auf 5°C abgekühlt, danach wird Ethylaluminiumsesquichlorid (EASC) zugegeben. Die Alterung kann mehrere Minuten bis mehrere Tage dauern bei einer Temperatur zwischen 10°C und -80°C. Während der Polymerisation werden Comonomere, wie beispielsweise ein Bisdien, hinzugefügt, um den Verzweigungsgrad des Polymers zu erhöhen und somit auch das sehr enge Verhältnis Lösungsviskosität / Mooney-Viskosität zu erhalten. Das dabei erhaltene verzweigte Polymer hat pro Molekül durch die Kopplung über das Bisdien mindestens 4 freie Kettenenden, während lineare Moleküle nur 2 Kettenenden besitzen.

Die Anzahl der Kettenenden im Polymer ist für die Energiedissipation verantwortlich. Je höher die Anzahl an freien Kettenenden, desto höher ist die Energiedissipation durch das Polymer. Je geringer jedoch die Energiedissipation des Polymers ist, desto geringer ist beispielsweise der Rollwiderstand und desto besser ist die Rückprallelastizität des Polymers. Dementsprechend sind die Endeigenschaften eines linearen Polymers mit nur 2 Kettenenden pro Molekül immer besser als die eines verzweigten Polymers bei gleicher Molmasse.

Bevorzugt werden Ziegler-Natta-Katalysatoren auf Basis von Verbindungen der Seltenen Erdmetalle eingesetzt, wie Cer-, Lanthan-, Praseodym-, Gadolinium- oder Neodymverbindungen, die in Kohlenwasserstoffen löslich sind. Besonders bevorzugt werden die entsprechenden Salze der Seltenen Erdmetalle als Ziegler-Natta-Katalysatoren eingesetzt, wie Neodymphosphonate, Neodymcarboxylate, insbesondere Neodymneodecanoat, Neodymoctanoat, Neodymnaphthenat, Neodym-2,2-diethyl-hexanoat oder Neodym-2,2-diethyl-heptanoat, sowie die entsprechenden Salze des Lanthans oder Praseodyms. Weiterhin umfassen die einsetzbaren Ziegler-Natta-Katalysatoren auch Katalysatorsysteme auf Basis von Metallocenen, wie z.B. beschrieben in EP-A 1025136 und EP-A 1078939**.**

Es ist bekannt, dass kommerziell hergestellte Polymere eine statistische Molmassenverteilung besitzen, wobei die Breite der Molmassenverteilung durch die Katalysatorherstellung beeinflusst wird.

Dies gestattet zunächst die Erzeugung von niedermolekularen Basispolymeren, was den großen Vorteil hat, bei den üblicherweise angewandten Lösungspolymerisationstechniken niedrigere Viskositäten im "cement" (Lösung des Polymeren in dem organischen Lösungsmittelmedium, das bei der Polymerisation verwendet wird) zu ermöglichen und daher einen Betrieb mit höheren Feststoffgehalten im "cement" erlaubt, da ein besserer Wärmetransport erreicht wird. Auch kann der Coldflow derartiger Dienpolymeren vermindert werden, so dass sie stärker mit Öl verstreckt werden können.

Es ist weiterhin bekannt, dass man Polydiene mit niedrigem cold-flow herstellen kann, wenn man die Dienpolymere nach der Polymerisation mit Dischwefeldichlorid, Schwefeldichlorid, Thionylchlorid, Dischwefeldibromid oder Thionylbromid behandelt **(**DE-AS 12 60 794**).**

Die DE 44 36 059 A1 beschreibt ebenfalls ein Verfahren zur sprungartigen Erhöhung des Molekulargewichts von Nd-katalysierten Dienkautschuken, wobei der Eigengeruch des Polymers durch einen Entspannungsschritt nach der Polymerisation verringert wird, um dabei alle niedrigsiedende Bestandteile des Reaktionsgemisches zu entfernen.

### Komponente b):

Es können alle aus dem Stand der Technik bekannten Polybutadiene für die erfindungsgemäße Kautschukzusammensetzung als Komponente b) eingesetzt werden, sofern deren Mooney-Viskosität (ML 1+4 bei 100 °C) nach der Polymerisation durch Modifizierung nochmal erhöht wurden. Derartige Modifizierungen sind dem Fachmann unter den Bezeichnungen "sprungartige Erhöhung der Mooney-Viskosität", "Mooney gesprungen", "Mooney-Sprung" oder "Mooney-Jump" bekannt.

Diese Modifzierung erfolgt typischerweise durch Umsetzung mit Schwefelchloriden.

Die Bezeichnung "sprungartige Erhöhung der Mooney-Viskosität" und ihre Abwandlungen, wie etwa "Mooney gesprungen", "Mooney-Sprung" oder "Mooney-Jump", beziehen sich auf Techniken, nach denen die Mooney-Viskosität (ML 1+4 bei 100 °C) der Polymere nach der Polymerisation bedeutend erhöht wird bzw. der Verzweigungsgrad erhöht wird. Üblicherweise wird das Polymerisat mit S₂Cl₂ modifiziert, um gemäß folgender schematischer Reaktionsgleichung das Polymer über Schwefelbrückenbindung zu verzweigen: 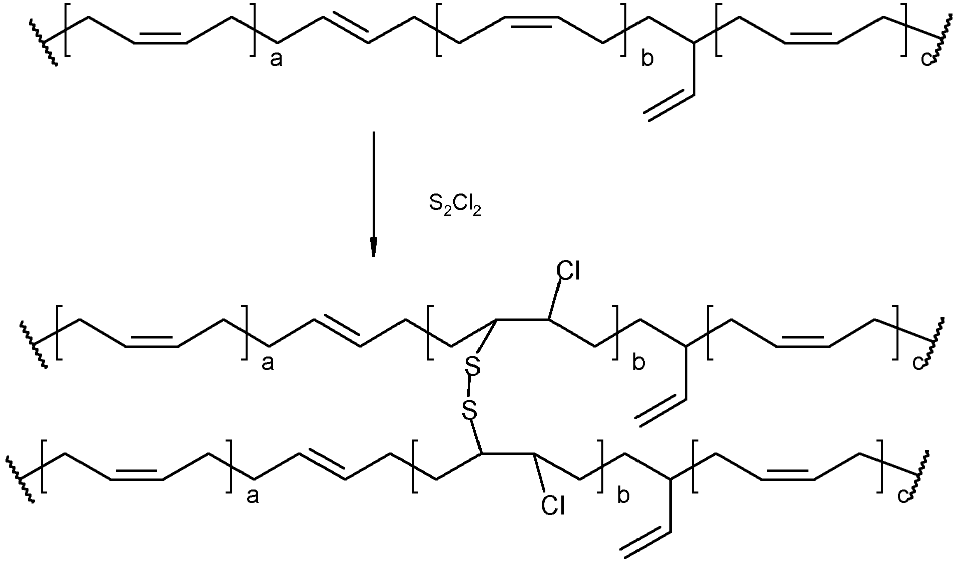 Der Verzweigungsgrad bzw. die Mooney-Viskosität (ML 1+4 bei 100 °C) wird somit erhöht. Das oben gezeigte Reaktionsschema beschreibt den "Mooney-Sprung" beispielhaft für ein hoch-cis-Polybutadien, wobei diese Reaktion auch an allen anderen dienhaltigen Polymeren durchgeführt werden kann.

Zur Klarstellung der Begrifflichkeiten werden wie folgt verstanden:

| | |
|---|---|
| Ausgangsmooney-Viskosität: | Mooney-Viskosität (ML 1+4 100°C) nach der Polymerisation des Polymers. |
| Endmooney-Viskosität: | Mooney-Viskosität (ML 1+4 100°C) nach der Modifizierung bzw. Mooney-Sprung oder Sprung-Reaktion des Polymers (Sprung-Polymer). |
| Sprung-Polymer: | Polybutadien nach der Modifizierung, nach dem Mooney-Sprung oder nach der Sprung-Reaktion |

Vorzugsweise wird das modifizierte Polybutadien durch Lösungspolymerisation in Gegenwart mindestens eines inerten, organischen Lösungsmittels und in Gegenwart von mindestens einem Katalysator auf Basis von Neodymverbindungen in einem Temperaturbereich von -20°C bis 150°C polymerisiert, die Polymerisation durch Zugabe von protischen Verbindungen gestoppt und das Polymerisat mittels Schwefelchloriden modifiziert.

Vorzugsweise werden die Schwefelchloride vor der Zugabe mit einer Carbonsäure, Fettsäure und/oder Fettsäureester behandelt.

Bevorzugt handelt es sich bei den Schwefelchloriden um Dischwefeldichlorid, Schwefelchlorid, Schwefelbromid, Schwefeldichlorid, Thionylchlorid, Dischwefeldibromid und/oder Thionylbromid.

Besonders bevorzugt wird in der vulkanisierbaren Kautschukzusammensetzung ein modifiziertes Polybutadien als Komponente b) eingesetzt, dessen Mooney Viskosität (ML 1+4 bei 100 °C) im Rahmen der vorangegangenen Modifzierungsreaktion durch Umsetzung des Polybutadiens mit Schwefelchloriden um mindestens 50%, bezogen auf die Mooney-Viskosität (ML 1+4 bei 100 °C) des Polybutadiens vor Zugabe der Schwefelchloride, erhöht wurde.

Vorzugsweise weist das modifizierte Polybutadien nach der Polymerisation eine Mooney-Viskosität (ML 1+4 bei 100 °C) (Ausgangsmooney-Viskosität) von mindestens 20 MU, bevorzugt 20 - 25 MU, besonders bevorzugt mindestens 40 MU auf und nach der Zugabe von Schwefelchloriden eine Mooney-Viskosität (ML 1+4 bei 100 °C) (Endmooney-Viskosität) von mindestens 30 MU, bevorzugt 40 - 50 MU, besonders bevorzugt 60 -80 MU auf, wobei der Gelgehalt kleiner als 1 Gew.-% beträgt.

Vorzugsweise werden für die erfindungsgemäße vulkanisierbare Kautschukzusammensetzung hochmolekulare Neodymium-katalysierte Polybutadiene (NdBR) mit einem Anteil an cis-1,4-Einheiten von > 95 Gew.-% und einem 1,2-Vinyl-Gehalt von < 1 Gew.- % eingesetzt, wobei die NdBR derart modifiziert sind, dass deren Mooney-Viskosität (ML 1+4 bei 100 °C) nach der Polymerisation erhöht wurden.

Bevorzugt wird das NdBR nach der Polymerisation mit Schwefelchloriden modifiziert.

Eine vorzugsweise Ausführungsform der erfindungsgemäßen vulkanisierbaren Kautschukzusammensetzung weist:
a) 50 bis 90 Gew.-Teile, vorzugsweise 60 bis 70 Gew.-Teile von mindestens einem funktionalisierten Lösungs-Butadien-Styrol-Copolymer (SSBR) (ölfrei) mit einer Glasübergangstemperatur (Tg) im Bereich von -110°C bis +20°C bezogen auf das ölfreie SSBR,
b) 10 - 50 Gew.-Teile, vorzugsweise 20 bis 40 Gew.-Teile von mindestens einem modifizierten Neodymkatalysierten Polybutadien (NdBR) mit einer Mooneyviskosität (ML 1+4 bei 100 °C) von mindestens 30 MU,
c) 50 - 120 Gew.-Teile, vorzugsweise 60 - 100 Gew.-Teile von mindestens einer Kieselsäure,
d) 2 - 25 Gew.-Teile, vorzugsweise 5 - 10 Gew.-Teile von mindestens einem weiteren Füllstoff,
e) 1 - 5 Gew.-Teile, vorzugsweise 2 - 4 Gew.-Teile von mindestens einem Vulkanisationsmittel,
f) 5 - 50 Gew.-Teile, vorzugsweise 10 - 40 Gew.-Teile von mindestens einem Öl,
g) ggf. 1 - 7 Gew.-Teile, vorzugsweise 2 - 5 Gew.-Teile von mindestens einem Kautschukadditiv,
wobei die Gew.Teil Angaben für die Komponenten c) bis g) jeweils auf 100 Gewichtsteile Gesamtkautschuk, d.h. die Summe aus Komponenten a) und b), bezogen sind.

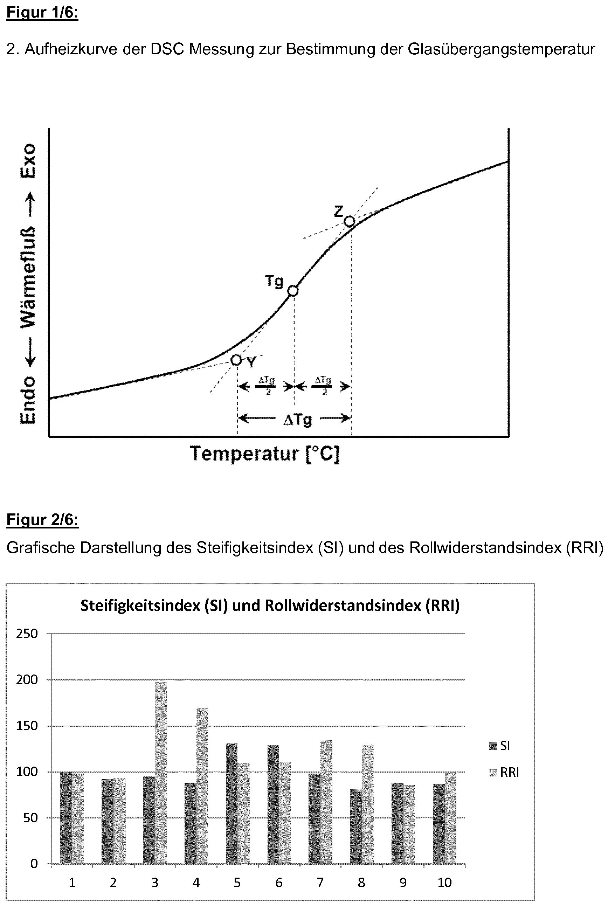

Die Glasübergangstemperaturen der als Komponente a) eingesetzten Kautschuke werden mittels DSC (Differential Scanning Calorimetry) nach DIN EN ISO 11357-1 und DIN EN 61006 bestimmt. Die Temperaturkalibrierung erfolgt mittels der Onsettemperaturen des fest-flüssig Übergangs (Abweichungen von der Anfangsbasislinie und der ansteigenden Schmelzkurve) von Indium (156,6°C) und von Blei (328°C). Vor Beginn des 1. Aufheizzyklus wird die Probe mit flüssigem Stickstoff mit einer Abkühlgeschwindigkeit von 320K/min auf -130°C abgekühlt. Die anschließende Aufheizung erfolgt unter Spülung mit Stickstoffgas bei einer Heizrate von 20K/min bis zu einer Temperatur von 150°C. Danach wird die Probe mit flüssigem Stickstoff auf -130°C abgekühlt und mit 20K/min erwärmt. Für die Auswertung wird das Thermogramm der 2. Aufheizung herangezogen. Die Auswertung erfolgt grafisch durch Anlegen von drei Geraden (siehe Figur 1). Die Glasübergangstemperatur Tg wird als Mittelpunktstemperatur der Schnittpunkte Y und Z erhalten.

Für die Bestimmung der Glasübergangstemperatur ölverstreckter Kautschuke muss das Öl aus dem Kautschuk entfernt werden. Die Ölentfernung kann durch erschöpfende Extraktion mit Methanol in einem Soxhlet-Extraktor erfolgen, wobei vor der Bestimmung der Glasübergangstemperatur das anhaftende Aceton unter Vakuum bis zur Gewichtskonstanz entfernt wird. Alternativ kann das Öl auch durch Umfällung einer toluolischen Kautschuklösung mit Hilfe von Methanol entfernt werden. Hierfür wird der ölverstreckte Kautschuk kleingeschnitten und bei Raumtemperatur unter Rühren in Toluol gelöst (1 g Kautschuk gelöst in 50 g Toluol). Danach wird die toluolische Kautschuklösung langsam in 500 g Methanol unter Rühren bei Raumtemperatur eingetropft. Der koagulierte Kautschuk wird isoliert, das anhaftende Lösungsmittel mechanisch abgepresst und anschließend im Vakuum bis zur Gewichtskonstanz getrocknet.

### Komponente c):

Erfindungsgemäß wird mindestens ein heller verstärkender Füllstoff als **Komponente c)** verwendet. Es können auch mehrere helle verstärkende Füllstoffe als Komponente c) verwendet werden. "Hell" im Sinne der Erfindung schließt insbesondere Ruß aus. Bei dem verstärkenden hellen Füllstoff handelt es sich vorzugsweise um Kieselsäure (SiO₂) oder Aluminiumoxid (Al₂O₃) oder Gemischen davon.

Wird Kieselsäure oder "Silica" (Ullmann's Encyclopedia of Industrial Chemistry, VCH Verlagsgesellschaft mbH, D-69451 Weinheim, 1993, "Silica", S.635-647) verwendet, so handelt es sich um pyrogene (ibid. S. 635-647) oder um Fällungskieselsäure (ibid. 642-647). Fällungskieselsäuren werden durch Behandlung von Wasserglas mit anorganischen Säuren erhalten, wobei vorzugsweise Schwefelsäure eingesetzt wird. Die Kieselsäuren können gegebenenfalls auch als Mischoxide mit anderen Metalloxiden, wie Al-, Mg-, Ca-, Ba-, Zn-, Zr-, Ti-Oxiden vorliegen. Bevorzugt sind Fällungskieselsäuren mit spezifischen Oberflächen von 5 bis 1000 m²/g, vorzugsweise von 20 bis 400 m²/g, jeweils bestimmt nach BET. Für die Herstellung von Reifenlaufflächen mit geringem Rollwiderstand sind hochdispergierbare Fällungskieselsäuren bevorzugt. Beispiele für bevorzugte hochdispergierbare Kieselsäuren schließen beispielsweise ein: Perkasil® KS 430 (AKZO), BV 3380 und Ultrasil®7000 (Evonik-Degussa), Zeosil® 1165, MP 1115 MP und HRS 1200 MP (Rhodia), Hi-Si1 2000 (PPG), Zeopol® 8715, 8741 oder 8745 (Huber), Vulkasil® S, N und C von Lanxess und behandelte Fällungskieselsäuren wie beispielsweise mit Aluminium "dotierte" Kieselsäuren, die in der EP-A-0 735 088 beschrieben sind. Ein oder mehrere Kieselsäuretypen können verwendet werden.

Aluminiumoxid kann ebenfalls eingesetzt werden, beispielsweise als hochdispergierbares Aluminiumoxid wie in der EP-A-0 810 258 beschrieben. Beispiele schließen ein: AI25 oder CR125 (Baikowski), APA- 1OORDX (Condea), Aluminiumoxid C (Degussa) und AKP-GO 15 (Sumitomo Chemicals).

Der helle verstärkende Füllstoff kann in Form von Pulvern, Mikroperlen, Granulaten oder Kugeln vorliegen. In einer bevorzugten Ausführungsform werden Kieselsäuren und/oder Aluminiumoxide verwendet. Besonders bevorzugt sind Kieselsäuren, insbesondere Fällungskieselsäuren.

Der Gesamtgehalt an hydroxylgruppenhaltigem oxidischen Füllstoff liegt üblicherweise im Bereich von 50 bis zu 120 Gew.-Teilen, vorzugsweise im Bereich von 60 bis 100 Gew.-Teilen, und besonders bevorzugt 25 bis 90 Gew.-Teilen bezogen auf 100 Gew.-Teile ölfreier Gesamtkautschuke (Summe aus a) und b)).

Es hat sich ferner bewährt, den mindestens einen hellen Füllstoff (Komponente c) zusammen mit mindestens einem polysulfidhaltigen Alkoxysilan einzusetzen. Hierbei handelt es sich um sogenannte Kupplungsmittel zur Dispergierung und Einbindung des verstärkenden Füllstoffs in die Elastomermatrix. Diese tragen, wie dem Fachmann bekannt, zwei Arten von funktionellen Gruppen, die Alkoxysilylgruppe, die an den hellen Füllstoff bindet, und die schwefelhaltige Gruppe, die an das Elastomer bindet. Erfindungsgemäß können ein oder mehrere der polysulfidhaltigen Alkoxysilane in Kombination verwendet werden.

Als polysulfidhaltige Alkoxysilane sind solche der nachfolgenden Formeln (I) und (II) besonders geeignet, ohne dass die nachfolgenden Definitionen einschränkend zu verstehen sind. Bei denjenigen der Formel (I) handelt es sich um solche, die zu beiden Seiten des zentralen Schwefels eine entsprechend substituierte Silylgruppe tragen, während dies in der Formel (II) nur an einer Seite der Fall ist.

Einsetzbar sind somit polysulfidhaltige Alkoxysilane der allgemeinen Formel (I) oder (II) 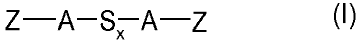 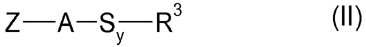 worin
- x: eine ganze Zahl von 2 bis 8 darstellt,
- y: eine ganze Zahl von 1 bis 8 darstellt,
- A: gleich oder verschieden sind und eine zweiwertige Kohlenwasserstoffgruppe ("Spacer") darstellen
- Z: gleich oder verschieden sind und eine der nachfolgend angegebenen Formeln besitzen 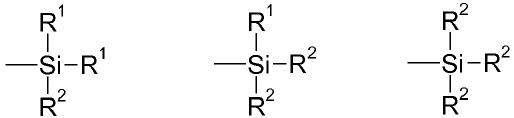
worin
- R¹: gleich oder verschieden, substituiert oder unsubstituiert sein können und eine C₁-C₁₈ Alkylgruppe, eine C₅-C₁₈ Cycloalkylgruppe oder C₆-C₁₈ Arylgruppe darstellen und
- R²: gleich oder verschieden, substituiert oder unsubstituiert sein können und eine C₁-C₁₈ Alkoxygruppe, eine C₅-C₁₈ Cycloalkoxygruppe oder C₆-C₁₈ Aryloxygruppe darstellen,
und
- R³: Wasserstoff, geradkettiges oder verzweigtes Alkyl, wobei die Alkylkette optional durch ein oder mehrere, bevorzugt bis zu fünf Heteroatome, insbesondere Sauerstoff, Schwefel oder N(H), unterbrochen sein kann, Aryl, bevorzugt C₆-C₂₀-Aryl und/oder einen Rest mit nachfolgenden Strukturen bedeutet

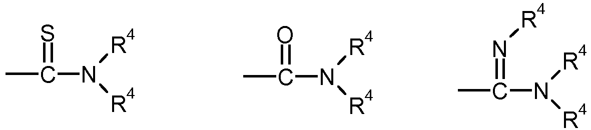

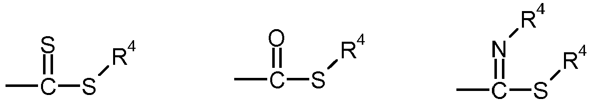

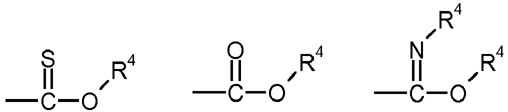

-C≡N

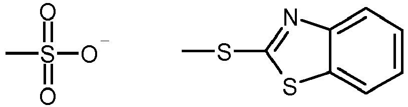

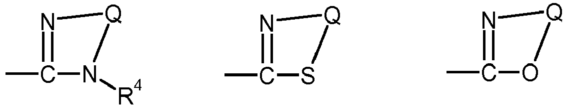

worin
- R⁴: für einen aliphatischen, heteroaliphatischen, cycloaliphatischen, aromatischen oder heteroaromatischen Rest mit 1 bis 20, bevorzugt 1 bis 10, Kohlenstoffatomen und mit optional 1 bis 3 Heteroatomen, vorzugsweise Sauerstoff, Stickstoff oder Schwefel steht.

In den polysulfidhaltigen Alkoxysilanen der allgemeinen Formel (I) ist die Zahl x vorzugsweise eine ganze Zahl von 2 bis 5. Im Falle eines Gemisches von polysulfidhaltigen Alkoxysilanen der oben angegebenen Formel (I), und insbesondere im Falle von üblichen, im Handel erhältlichen Gemischen, stellt "x" einen Mittelwert dar, der vorzugsweise im Bereich von 2 bis 5 liegt und insbesondere in der Nähe von 2 oder 4. Die Erfindung kann vorteilhaft mit Alkoxysilansulfiden mit x=2 und x=4 durchgeführt werden.

In den polysulfidhaltigen Alkoxysilanen der allgemeinen Formeln (I) und (II) sind die substituierten oder unsubstituierten Gruppen A gleich oder verschieden und stehen vorzugsweise für eine zweiwertige aliphatische, heteroaliphatische, aromatische oder heteroaromatische Kohlenwasserstoffgruppe, die gesättigt oder ein- oder mehrfach ungesättigt ist und 1 bis 20, bevorzugt 1 bis 18 Kohlenstoffatome sowie optional 1 bis 3 Heteroatome, insbesondere Sauerstoff, Schwefel oder Stickstoff, aufweist. Als Gruppe A sind insbesondere C₁-C₁₈ Alkylengruppen oder C₆-C₁₂ Arylengruppen geeignet, besonders bevorzugt sind C₁-C₁₀ Alkylengruppen, insbesondere C₂-C₄ Alkylengruppen und ganz besonders bevorzugt Propylen.

In den polysulfidhaltigen Alkoxysilanen der allgemeinen Formeln (I) und (II) sind R¹ gleich oder verschieden und bedeuten vorzugsweise C₁-C₆ Alkyl, Cyclohexyl oder Phenyl, besonders bevorzugt C₁-C₄ Alkyl und insbesondere Methyl und/oder Ethyl.

In den polysulfidhaltigen Alkoxysilanen der allgemeinen Formeln (I) und (II) sind R² gleich oder verschieden und bedeuten vorzugsweise C₁-C₁₀-Alkoxy, besonders bevorzugt C₁-C₈-Alkoxy, insbesondere Methoxy und/oder Ethoxy, C₅-C₈ Cycloalkoxy, besonders bevorzugt Cyclohexyloxy, oder C₆-C₁₄ Aryloxy, besonders bevorzugt Phenoxy.

Diese sogenannten "symmetrischen" polysulfidhaltigen Alkoxysilane sowie verschiedene Verfahren zu ihrer Herstellung sind z.B. in US-A-5,684,171 und US-A-5,684,172 beschrieben, die für x im Bereich von 2 bis 8 eine detaillierte Liste von bekannten Verbindungen angeben.

Das polysulfidhaltige Alkoxysilan ist vorzugweise ein Polysulfid, insbesondere ein Disulfid oder ein Tetrasulfid von Bis(C₁-C₄)trialkoxysilylpropyl, noch bevorzugter Bis(C₁-C₄)trialkoxysilylpropyl und insbesondere Bis(2-ethoxysilylpropyl) oder Bis(3-trimethoxysilylpropyl) oder Bis(triethoxysilylpropyl). Das Disulfid von Bis(triethoxysilylpropyl) oder TESPD der Formel [(C₂H₅O)₃Si(CH₂)₃S]₂ ist z.B. von Evonik Degussa unter den Bezeichnungen Si266 oder Si75 (im zweiten Fall in Form eines Gemisches von Disulfid und Polysulfid) oder auch von der Firma Witco unter der Bezeichnung Silquest A 1589 im Handel erhältlich. Das Tetrasulfid von Bis(triethoxysilylpropyl) oder TESPT der Formel [(C₂H₅O)₃Si(CH₂)₃S₂]₂ ist z.B. von Evonik Degussa unter der Bezeichnung SI 69 (oder X-50S mit 50 Gew.% Russ als Träger) oder von der Firma Witco unter der Bezeichnung Silquest A 1289 (wobei es sich in beiden Fällen um ein kommerzielles Gemisch von Polysulfid mit einem Mittelwert für x in der Nähe von 4 handelt) erhältlich.

Die polysulfidhaltigen Alkoxysilane werden in den erfindungsgemäßen Kautschukmischungen zweckmäßigerweise mit 6 bis 12 Gew.-%, bevorzugt 1 bis 10 Gew.-%, bezogen auf 100 Gew.-% Kieselsäure, eingesetzt.

### Komponente d):

Die erfindungsgemäße vulkanisierbare Zusammensetzung enthält als Komponente d) mindestens einen weiteren Füllstoff. Als Füllstoffe können z.B. Ruß, Bariumsulfat, Titandioxid, Zinkoxid, Calciumoxid, Calciumcarbonat, Magnesiumoxid, Aluminiumoxid, Eisenoxid, Aluminiumhydroxid, Magnesium-hydroxid, Aluminiumsilikate, Diatomeenerde, Talkum, Kaoline, Bentonite, Kohlenstoff Nanotubes, Teflon (letzteres bevorzugt in Pulverform) oder Silikate eingesetzt werden. Bevorzugt wird Ruß eingesetzt.

Als Russe haben sich Ruße vom Typ HAF, ISAF und SAF bewährt, die üblicherweise in Luftreifen und insbesondere in den Laufstreifen von Luftreifen eingesetzt werden. Als Beispiele für diese Ruße können N110, N 115, N220, N134, N234, N339, N347 und N375 genannt werden, die dem Fachmann hinreichend bekannt und von diversen Herstellern käuflich erhältlich sind.

Wird Ruß als weiterer Füllstoff eingesetzt, so beträgt der Anteil der Kieselsäure (Komponente c) jedoch mehr als 50 Gew.-%, vorzugsweise mehr als 75 Gew.-%, bezogen auf die Gesamtmenge der verwendeten Füllstoffe in Form von Komponenten c) und d). Der Anteil von Ruß ist dann weniger als 50 Gew.-% und bevorzugter weniger als 40 Gew.-%. In einer bevorzugten Ausführungsform wird in den erfindungsgemäßen Kautschukzusammensetzungen Ruß in Mengen von 2 bis 25 Gew.-Teilen, bevorzugt 5 - 10 Gew.-Teilen, bezogen auf 100 Gew.-Teilen ölfreier Gesamtkautschuk zugesetzt.

### Komponente e):

Erfindungsgemäß wird mindestens ein Vulkanisationsmittel als **Komponente e)** eingesetzt. Es können auch mehrere Vulkanisationsmittel eingesetzt werden. Nachfolgend werden einige Beispiele genannt.

Zur Vernetzung der erfindungsgemäßen Kautschukzusammensetzung eignet sich entweder Schwefel in Form elementaren Schwefels oder in der Form eines Schwefelspenders. Elementarer Schwefel wird als löslicher oder unlöslicher Schwefel eingesetzt.

Unter löslichem Schwefel versteht man die bei gewöhnlichen Temperaturen einzige stabile Form, den gelben Cyclooctaschwefel (S₈) oder α-S, die aus typischen rhombischen Kristallen besteht und in Schwefelkohlenstoff hoch löslich ist. So lösen sich bei 25°C in 100g CS₂ 30g α-S (Stichwort "Schwefel" des online Römpp Chemie Lexikons, Stand August 2004, Georg Thieme Verlag Stuttgart).

Unter unlöslichem Schwefel versteht man eine Schwefelmodifikation, die nicht zum sogenannten Ausblühen an der Oberfläche von Kautschukmischungen neigt. Diese spezielle Schwefelmodifikation ist zu 60 bis 95 % in Schwefelkohlenstoff unlöslich.

Beispiele für Schwefelspender sind Caprolactamdisulfid (CLD), Dithiomorpholin (DTDM) oder 2-(4-Morpholinodithio)benzothiazol (MBSS) (W. Hoffmann "Kautschuktechnologie", S. 254 ff, Gentner Verlag Stuttgart (1980).

Schwefel und/oder Schwefelspender werden in der erfindungsgemäßen Kautschukmischung in einer Menge im Bereich von 0,1 bis 15 Gew.-Teilen, bevorzugt 0,1-10 Gew.-Teilen, bezogen auf 100 Gew.-Teile ölfreier Gesamtkautschuk eingesetzt.

In der erfindungsgemäßen Kautschukmischung können ferner auch noch einer oder mehrere Vulkanisationsbeschleuniger zum Einsatz kommen, die für die Schwefelvulkanisation geeignet sind.

Entsprechende Vulkanisationsbeschleuniger sind in J. Schnetger "Lexikon der Kautschuktechnik" 3. Auflage, Hüthig Verlag Heidelberg, 2004, Seiten 514-515, 537-539 und 586-589 erwähnt.

Im Rahmen der vorliegenden Erfindung können solche Vulkanisationsbeschleuniger z.B. ausgewählt werden aus der Gruppe der Xanthogenate, Dithiocarbamate, Tetramethylthiuramdisulfide, Thiurame, Thiazole, Thioharnstoff-Derivate, Amin-Derivate wie Tetramine, Sulfenimide, Piperazine, Amincarbamate, Sulfenamide, Bisphenol- und Triazin-Derivate sowie Polythiophosphorverbindungen der allgemeinen Formel (III) oder (IV). 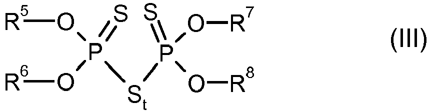 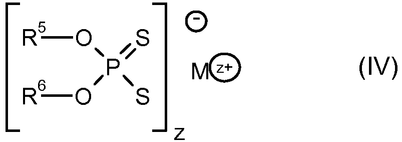 worin
- R⁵, R⁶, R⁷ und R⁸: gleich oder verschieden sind und für aliphatische, heteroaliphatische, aromatische oder heteroaromatische Reste mit 1 bis 24, bevorzugt 1 bis 18 Kohlenstoffatomen, und optional 1 bis 4 Heteroatomen, insbesondere N, S oder O, stehen,
- t: für eine ganze Zahl von 1 bis 8, bevorzugt 3 bis 6 steht,
- z: für eine ganze Zahl von 1 bis 3, bevorzugt 1 bis 2 steht, und
- M^{z+}: ein Metallkation mit der Ladung z+ bedeutet, wobei z+ für 1 bis 3, bevorzugt 1 und 2 steht, oder ein Kation der Formel N(R⁹)₄⁺ bedeutet, worin R⁹ gleich oder verschieden sind und Wasserstoff und/oder die Bedeutungen R⁵ besitzen können.

Bei den Verbindungen gemäß allgemeiner Formel (III) handelt es sich um Phosphorylpolysulfide und bei den Verbindungen gemäß allgemeiner Formel (IV) um Dithiophosphate.

Folgende Metallkationen kommen für M^{z+} in Frage: Li, Na, K, Rb, Cs, Be, Mg, Ca, Sr, Ba, Al, Nd, Zn, Cd, Ni und Cu. Bevorzugt sind: Na, K, Zn und Cu. Ebenfalls bevorzugt steht M^{z+} für NH₄⁺.

Folgende Metalldithiophosphate sind von besonderem Interesse: 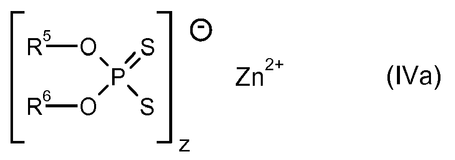 worin
- z: gleich 2 ist,
- R⁵ und R⁶: gleich oder verschieden sind und Wasserstoff oder eine geradekettige oder verzweigte, substituierte oder unsubstituierte Alkylgruppe oder Cycloalkylgruppe mit 1 bis 12 Kohlenstoffatomen, besonders bevorzugt eine C₂-C₁₂ Alkylgruppe oder eine C₅-C₁₂ Cycloalkylgruppe und insbesondere Ethyl, Propyl, Isopropyl, Butyl, Isobutyl, Cyclohexyl, Ethylhexyl oder Dodecyl bedeuten.

Derartige Verbindungen der allgemeinen Formel (III) oder (IV) können optional auch in geträgerter oder polymergebundener Form eingesetzt werden.

Geeignete Vulkanisationsbeschleuniger sind Benzothiazyl-2-cyclohexyl-sulfenamid (CBS), Benzothiazyl-2-tert.-butylsulfenamid (TBBS), Benzothiazyl-2-dicyclohexylsulfenamid (DCBS), 1,3-Diethylthioharnstoff (DETU), 2-Mercaptobenzothiazol (MBT) und dessen Zinksalze (ZMBT), Kupfer-dimethyldithiocarbamat (CDMC), Benzothiazyl-2-sulfenmorpholid (MBS), Benzothiazyldicyclo-hexylsulfenamid (DCBS), 2-Mercaptobenzothiazoldisulfid (MBTS), Dimethyldiphenylthiuramdisulfid (MPTD), Tetrabenzylthiuramdisulfid (TBZTD), Tetramethylthiorammonosulfid (TMTM), Dipenta-methylenthiuramtetrasulfid (DPTT), Tetra-iso-butylthiuramdisulfid (IBTD), Tetraethyl-thiuramdisulfid (TETD), Tetramethylthiuramdisulfid (TMTD), Zink-N-dimethyl-dithio-carbamat (ZDMC), Zink-N-diethyldithiocarbamat (ZDEC), Zink-N-dibutyl-dithiocarbamat (ZDBC), Zink-N-ethylphenyldithio-carbamat (ZEBC), Zinkdibenzyldithiocarbamat (ZBEC), Zinkdiisobutyldithiocarbamat (ZDiBC), Zink-N-pentamethylendithiocarbamat (ZPMC), Zink-N-ethylphenyldithiocarbamat (ZEPC), Zink-2-Mercaptobenzothiazol (ZMBT), Ethylenthioharnstoff (ETU), Tellurdiethyldithiocarbamat (TDEC), Diethylthioharnstoff (DETU), N,N-Ethylenthioharnstoff (ETU), Diphenylthioharnstoff (DPTU), Triethyltrimethyltriamin (TTT); N-t-Butyl-2-benzothiazol-sulfenimid (TBSI); 1,1'-Dithiobis(4-methyl-piperazin); Hexamethylendiamincarbamat (HMDAC); Benzothiazyl-2-tert.-butylsulfenamid (TOBS), N,N'-Diethylthiocarbamyl-N'-cyclohexyl-sulfenamid (DETCS), N-Oxidiethylendithio-carbamyl-N'-oxydiethylensulfenamid (OTOS), 4,4'-Dihydroxydiphenylsulfon (Bisphenol S), Zn-isopropylxanthogenat (ZIX), Selen-, Tellur-, Blei-, Kupfer- und Erdalkalisalze von Dithiocarbaminsäuren; Pentamethylenammonium-N-pentamethylendithiocarbamat; Cyclohexylethylamin; Dibutylamin; Poly-ethylenpolyamine, Polyethylenpolyimine wie z. B. Triethylentetramin (TETA), Phosphorylpolysulfide wie z. B. 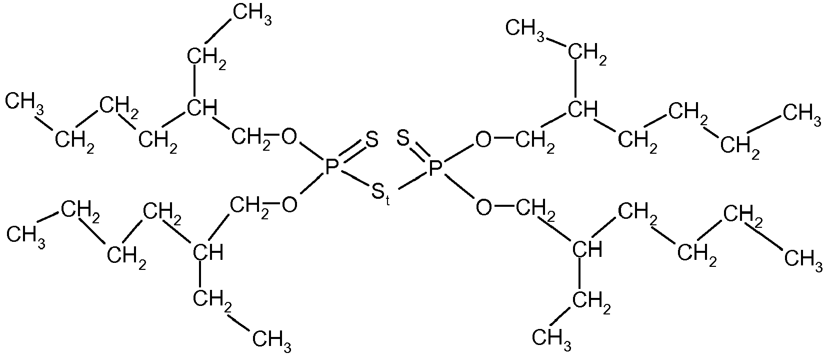 mit t = 2 bis 4, (**Rhenocure® SDT/S** gebunden an 30 Gew.-% hochaktive Kieselsäure der Rhein Chemie Rheinau GmbH) und Zinkdithiophosphate, wie z. B. **Rhenocure® ZDT/G** gebunden an 30 Gew.-% hochaktive Kieselsäure und 20 Gew.-% Polymerbinder der Rhein Chemie Rheinau GmbH mit der Formel 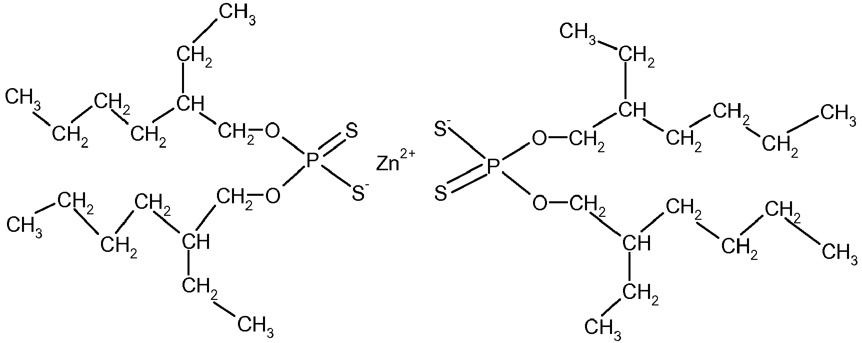 handeln.

Die Vulkanisationsbeschleuniger werden bevorzugt in einer Menge im Bereich von 0,1 bis 15 Gew.-Teilen, bevorzugt 0,1-10 Gew.-Teilen, bezogen auf 100 Gew.-Teile ölfreier Gesamtkautschuk eingesetzt.

In der erfindungsgemäßen Mischung kann ferner Zinkoxid als Aktivator für die Schwefelvulkanisation enthalten sein. Die Auswahl einer geeigneten Menge ist dem Fachmann ohne großen Aufwand möglich. Wird das Zinkoxid in einer etwas höheren Dosierung eingesetzt, so führt dies zu einer vermehrten Ausbildung monosulfidischer Bindungen und damit zu einer verbesserten Alterungsbeständigkeit

### Komponente f):

Als Komponente f) werden dem Fachmann bekannte und üblichen Prozessöle eingesetzt. Bevorzugt wird ein naphthenisches Öl, welches eine Gasübergangstemperatur (Tg) zwischen -80°C und -40°C, eine nach der IP 346-Methode mit DMSO extrahierbare Menge von weniger als 3 Gew.-% aufweist, wovon die Summe der polycyclischen Aromaten < 10 ppm und die Menge an alpha-Benzopyren < 1 ppm, gemessen nach dem Grimmertest, betragen. Der Grimmertest nach der Methode von Prof. Grimmer, Hamburg-Ahrensburg, ist in Fresenius, Analytische Chemie, 1983, Band 314, S. 29-36 veröffentlicht.

### Komponenten g):

Die erfindungsgemäße Kautschukzusammensetzung kann ein oder mehrere weitere Kautschukadditive aufweisen.

Beispielsweise kann Stearinsäure (Octadecansäure) enthalten sein. Diese ist dem Fachmann dafür bekannt, dass sie in der Kautschuktechnologie ein breites Wirkungsspektrum besitzt. So besteht eine ihrer Wirkungen darin, dass sie zu einer verbesserten Dispersion von Zinkoxid und der Vulkanisationsbeschleuniger führt. Ferner kommt es zu einer Komplexbildung mit Zinkionen im Rahmen der Schwefelvulkanisation.

Auch Zinkoxid kann in der erfindungsgemäßen Zusammensetzung enthalten sein. Bewährt haben sich Mengen von 0,5 bis 15 Gew.-Teilen, bevorzugt 1 bis 7,5 Gew.-Teilen, besonders bevorzugt 1 bis 5 Gew.%, bezogen auf 100 Gew.-Teile ölfreier Gesamtkautschuk.

Stearinsäure wird vorzugsweise in der erfindungsgemäßen Zusammensetzung in einer Menge von 0,1 bis 7, bevorzugt 0,25 bis 7 Gew.-Teilen, bevorzugt 0,5 bis 5 Gew.-Teilen, bezogen auf 100 Gew.-Teile ölfreier Gesamtkautschuk eingesetzt.

Alternativ oder aber auch zusätzlich zur Kombination aus Zinkoxid und Stearinsäure kann Zinkstearat eingesetzt werden. In diesem Fall wird üblicherweise eine Menge von 0,25 bis 5 Gew.-Teilen, bevorzugt 1 bis 3 Gew.-Teile, jeweils bezogen auf 100 Gew.-Teile ölfreier Gesamtkautschuk verwendet.

Weitere optional als Komponente(n) g) der erfindungsgemäßen Kautschukmischungen zuzusetzende Kautschukadditive umfassen Alterungsschutzmittel, Reversionsschutzmittel, Lichtschutzmittel, Ozonschutzmittel, Wachse, Mineralöl, Verarbeitungshilfsmittel, Weichmacher, Mineralöle, Tackifier, Treibmittel, Farbstoffe, Pigmente, Harze, Streckmittel, organische Säuren, Vulkanisationsverzögerer, Metalloxide sowie weitere Füllstoffaktivatoren, wie beispielsweise Triethanolamin, Trimethylolpropan, Polyethylenglykol, Hexantriol oder andere Additive, wie etwa Ruß, die in der Gummiindustrie bekannt sind (Ullmann's Encyclopedia of Industrial Chemistry, VCH Verlagsgesellschaft mbH, D-69451 Weinheim, 1993, vol A 23 "Chemicals and Additives", S. 366-417).

Als Vulkanisationsverzögerer können den erfindungsgemäßen Zusammensetzungen beispielsweise Sulfonamide, Sulfanilide oder Phthalimide zugesetzt werden. Geeignet sind z.B. N-Trichlormethylsulfenylbenzolsulfanilid, N-Cyclohexylthiophthalimid, Phtalsäureanhydrid (PTA), Salicylsäure (SAL), N-Nitrosodiphenylamin (NDPA), Trichlormelamin (TCM), Maleinsäureanhydrid (MSA) und N-Trichlormethylsulfenylbenzolsulfanilid (letzteres kommerziell unter der Bezeichnung Vulkalent® E erhältlich). Entsprechende Vulkanisationsverzögerer sind ebenfalls in J. Schnetger, "Lexikon der Kautschuktechnik", 3. Auflage, Hüthig Verlag, Heidelberg, 2004, Seite 590 erwähnt.

Als Antioxidantien können den erfindungsgemäßen Zusammensetzungen beispielsweise Mercaptobenzimidazol (MBI), 2-Mercaptomethylbenzimidazol (2-MMBI), 3-Mercaptomethylbenzimidazol (3-MMBI), 4-Mercaptomethylbenzimidazol (4-MMBI), 2,2,4-Trimethyl-1,2-dihydrochinlin (TMQ), Nickel-dibutyldithiocarbamat (NDBC), 2,6-Di-tert.-butyl-p-kresol (BHT) und 2,2'-Methylen-bis(4-methyl-6tert.butyl-phenol) (BKF) eingesetzt werden. Diese Antioxidantien können auch in nicht-staubenden, insbesondere auch polymergebundenen Lieferformen eingesetzt werden (als "Microgranulat" (MG) oder "Microgranulat coated" (MGC)).

Darüber hinaus sind auch Alterungsschutzmittel einsetzbar, beispielsweise in Form verfärbender Alterungsschutzmittel mit Ermüdungs- und Ozonschutzwirkung, z.B. N-Isopropyl-N'-phenyl-p-phenylen-diamin (IPPD); N-1,3-Dimethylbutyl-N'-phenyl-p-phenylendiamin (6PPD), N-1,4-Dimethylpentyl-N'-phenyl-p-phenylendiamin (7PPD), NN'-bis-(1,4-Dimethylpentyl)-p-phenylendiamin (77PD) etc., verfärbender Alterungsschutzmittel mit Ermüdungsschutz, aber ohne Ozonschutzwirkung, z.B. Phenyl-α-naphthylamin (PAN); verfärbender Alterungsschutzmittel mit geringer Ermüdungs- und ohne Ozonschutzwirkung, z.B. octyliertes Diphenylamin (ODPA); nicht verfärbender Alterungsschutzmittel mit Ermüdungsschutz und gutem Hitzeschutz, z.B. styrolisierte Phenole (SPH); nicht verfärbender Ozonschutzmittel ohne Alterungsschutzwirkung, z.B. Wachse (Gemische aus speziellen Kohlenwasserstoffen), cyclische Acetale und Enolether; sowie Hydrolyseschutzmittel wie z.B. Polycarbodiimide.

Ferner können den erfindungsgemäßen Kautschukzusammensetzungen auch Mastikationschemikalien zugesetzt werden, welche vorzugsweise ausgewählt werden aus der Gruppe bestehend aus Thiophenolen, Thiophenolzinksalzen, substituierten aromatischen Disulfiden, Derivaten von Thiocarbonsäuren, Hydrazinderivaten, Nitrosoverbindungen und Metallkomplexen, besonders bevorzugt Eisenhemiporphyrazin, Eisenphthalocyanin, Eisenacetonylacetat und dessen Zn-Salz. Die Mastikationschemikalien werden insbesondere zur Mastikation des in der Mischung verwendeten Naturkautschuks verwendet, wobei die Mastikation des Naturkautschuks vorzugsweise in einem separaten Verfahrensschritt vor der eigentlichen Mischungsherstellung durchgeführt wird.

Die als Komponente(n) g) verwendbaren Kautschukadditive werden in üblichen Mengen, die sich u. a. nach dem Verwendungszweck richten, eingesetzt. Übliche Mengen für einzelne Kautschukadditive liegen beispielsweise bei 0,1 bis 50 phr, wobei Öl, das als Verstreckungsmittel von Kautschuken in die Kautschukzusammensetzungen eingebracht wird, bei dieser Mengenangabe unberücksichtigt bleibt.

Ein **weiterer Gegenstand der Erfindung** ist die **Herstellung der erfindungsgemäßen Kautschukzusammensetzung.** Diese erfolgt vorzugsweise durch Mischen der Komponenten a) bis f) und optional g). Das Mischen kann in einer oder bis zu 6 Stufen erfolgen. Bewährt hat sich ein dreistufiger Mischprozess mit zwei Mischstufen im Innenmischer und einer abschließenden Mischstufe auf einer Walze (sogenannte "Fertigmischstufe"). Möglich ist auch ein zweistufiger Mischprozess, wobei die 1. Mischstufe im Innenmischer und die 2. Mischstufe auf einer Walze erfolgt. Ferner ist ein 2stufiger Mischprozess möglich, bei dem beide Mischstufen ein einem Innenmischer erfolgen, wobei die Mischung vor der Zugabe der Komponenten, die üblicherweise auf der Walze zugegeben werden, auf Temperaturen < 120°C, vorzugsweise <110°C abgekühlt wird.

Geeignete Aggregate für die Herstellung der erfindungsgemäßen Kautschukzusammensetzungen sind an sich bekannt und schließen beispielsweise Walzen, Innenmischer oder auch Mischextruder ein.

Bei Anwendung eines 2stufigen Mischverfahrens im Innenmischer oder eines drei- oder mehrstufigen Mischverfahrens wird in der ersten und/oder in der zweiten sowie späteren Mischstufen, vorzugsweise in der ersten und zweiten Mischstufe bei Temperaturen von 60°C bis 180 °C, vorzugsweise 120°C bis 175°C, besonders bevorzugt 125°C bis 170°C gearbeitet, wobei die Mischzeiten bei diesen Temperaturen im Bereich von 1 bis 15 Minuten liegen und so gewählt werden, dass nicht bereits ein Vulkanisationsstart (Anvulkanisation oder Scorch) erfolgt. Die Anfangstemperatur beträgt vorzugsweise 60°C.

Die Temperaturen in der Fertigmischstufe betragen 20 bis 120°C, vorzugsweise 30 bis 110 °C.

Üblicherweise erfolgt das Mischen im Innenmischer in einem Temperaturbereich von 20 bis 180°C, bevorzugt im Temperaturbereich 50 bis 170 °C oder auf einer Walze bei weniger als 110 °C. Die Wahl einer geeigneten Temperatur kann der Fachmann gemäß seiner Fachkenntnisse vornehmen, zu beachten ist, dass es beim Mischen einerseits zu einer Silanisierung der Kieselsäure und andrerseits nicht bereits zu einer verfrühten Vulkanisation kommt (Scorching).

Die Vulkanisation der erfindungsgemäßen Zusammensetzungen erfolgt üblicherweise bei einer Temperatur im Bereich von 100 bis 250°C, bevorzugt von 130 bis 180°C, entweder unter Normaldruck (1 bar) oder optional unter einem Druck von bis zu 200 bar. Die Vernetzung findet im Rahmen eines Formgebungsprozesses statt.

Die erfindungsgemäß hergestellten Kautschukzusammensetzungen eignen sich zur Herstellung von Vulkanisaten und zur Herstellung von Luftreifen, Winterreifen, Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

Nachfolgend werden die erfindungsgemäßen Kautschukzusammensetzungen anhand von Beispielen näher erläutert:

### Beispiele:

### I. Kautschuke

Für die erfindungsgemäßen Kautschukzusammensetzungen wurden verschiedene Polybutadiene und SSBR eingesetzt. Alle Polybutadiene und SSBR sind Produkte der Lanxess Deutschland GmbH.

**Tabelle 1** zeigt die eingesetzten Polybutadiene, wobei es sich bei den Buna PBR 4065 (Handelsname Buna ® Nd 24 EZ) und Buna PBR 4076 (Handelsname Buna® 22 EZ) um modifizierte Polybutadiene handelt. Weiterhin sind in Tabelle 1 die wichtigen Eigenschaften zusammengefasst.

**Tabelle1: Eingesetzte Polybutadiene**

| **Hoch-cis-Poly-butadien** | **Typ** | **Modifikation** | **MV ¹ [MU]** | **MSR ² [MU/s]** | **SV ³ [m Pas]** | **Verzweigungsindex (MV/SV)*10** | **Mn [kg/mol]** | **Mw [kg/mol]** | **PDI ⁴** |
|---|---|---|---|---|---|---|---|---|---|
| Buna CB 1203 | CoBR | nein | 43 | 0,41 | 145 | 3,0 | 145 | 395 | 2,7 |
| Buna CB 24 | NdBR | nein | 43 | 0,68 | 230 | 1,9 | 205 | 420 | 2,0 |
| Buna CB 22 | NdBR | nein | 63 | 0,74 | 350 | 1,8 | 238 | 466 | 2,0 |
| Buna PBR 4065 | NdBR | ja | 44 | 0,45 | 150 | 2,9 | 171 | 375 | 2,2 |
| Buna PBR 4076 | NdBR | ja | 63 | 0,45 | 280 | 2,3 | 212 | 462 | 2,2 |

| | | | | | | | | | |
|---|---|---|---|---|---|---|---|---|---|
| 1: MV bedeutet die Mooney Viskosität ML1+4 @100°C in Mooney Units [MU]. 2: Der **MSR Wert** in Tabelle 1 wurde gemäß ISO 289-4:2003 bestimmt. 3: Der **SV Wert** ("Solution Viscosity") in Tabelle 1 wurde in einer 5,43 Gew.%igen Lösung des Polymeren in Toluol mit einem Rotationsviskosimeter des Typs Brookfield LVDC-1+1 bei einer Temperatur von 23°C bestimmt. 4: Der Wert für die Polydispersität "**PDI**" ergibt sich als das Gewichtsmittel des Molekulargewichts dividiert durch das Zahlenmittel des Molekulargewichts (PDI = Mw/Mn) | | | | | | | | | |

**Tabelle 2** zeigt die eingesetzten SSBR, wobei es sich bei den PBR 4078 und PBR 4070 um endgruppenfunktionalisierte SSBR handelt. PBR 4088 stellt ein in der Polymerkette funktionalisiertes SSBR dar. VSL 5025-2 ist nicht funktionalisiert. Weiterhin sind in Tabelle 2 die wichtigen Eigenschaften zusammengefasst.

**Tabelle 2: Eingesetzte SSBR**

| **SSBR Bezeichnung** | **Polymerrückgrad-Funktionalisierung** | **End-gruppen-Funktionalisierung** | **Vinyl-Gehalt [Gew-%]** | **Styrol Gehalt [Gew-%]** | **MV ¹ [MU]** | **Öl-Gehalt [Gew-%]** | **Tg [°C]** |
|---|---|---|---|---|---|---|---|
| VSL 5025-2 | nein | nein | 51 | 25 | 48 | 27 | -29 |
| VSL 5025-0 HM | nein | nein | 50 | 25 | 65 | 0 | -22 |
| PBR 4088 | ja | nein | 40 | 26 | 54 | 27 | -31 |
| PBR 4078 | nein | ja | 49 | 23 | 65 | 20 | -27 |
| PBR 4070 | nein | ja | 32 | 34 | 81 | 27 | -29 |

| | | | | | | | |
|---|---|---|---|---|---|---|---|
| 1: MV bedeutet die Mooney Viskosität ML1+4 @100°C in Mooney Units [MU]. | | | | | | | |

### II. Rezepturen

Für die Mischungsstudien wurden die in Tabelle 3 genannten Substanzen eingesetzt:

**Tabelle 3:**

| **Handelsname** | **Hersteller** |
|---|---|
| VULCAN J/N375 als Ruß | Cabot Corporation |
| TDAE oil, Öl | Hansen und Rosenthal KG |
| ZINKWEISS ROTSIEGEL als Zinkoxid | Grillo Zinkoxid GmbH |
| EDENOR C 18 98-100 als Stearinsäure | Caldic Deutschland GmbH |
| VULKANOX 4020/LG als Stabilisator | Lanxess Deutschland GmbH |
| VULKANOX HS/LG als Stabilisator | Lanxess Deutschland GmbH |
| VULKACIT® NZ/EGC als Beschleuniger | Lanxess Deutschland GmbH |
| MAHLSCHWEFEL 90/95 CHANCEL, Schwefel | Solvay Barium Strontium |
| ANTILUX 654, Wachs | RheinChemie Rheinau GmbH |
| Si 69 , Silan | Evonic Degussa GmbH |
| RHENOGRAN DPG-(80), Diphenylguanidin | RheinChemie Rheinau GmbH |
| VULKALENT E/C, Sulfonamid | Lanxess Deutschland GmbH |
| ULTRASIL 7000 GR, Silica | Evonic Degussa GmbH |

**Tabelle 4** führt die Rezepturen der erfindungsgemäßen Kautschukzusammensetzungen auf. Die Angaben der Bestandteile der Kautschukzusammensetzungen sind in phr (Gewichtsteile pro 100 Gewichtsteile Gesamtkautschuk).

Als "S-SBR" werden die SSBRs aus Tabelle 2 und für "High-cis NdBR" die Polybutadiene aus Tabelle 1 eingesetzt.

**Tabelle 4:**

| **Bezeichnung** | **Menge in phr (g pro 100 g Kautschukmenge)** |
|---|---|
| SSBR (Berechnung ohne Öl) | 70 |
| Hoch-cis-Nd BR | 30 |
| Silica (ULTRASIL 7000 GR) | 90 |
| Si 69, Silan | 7,2 |
| VULCAN J/N375 als Ruß | 7 |
| TDAE oil, Öl | 36,3 |
| AFLUX 37, GE 1837 als Verarbeitungshilfsmittel | 3 |
| ZINKWEISS ROTSIEGEL als Zinkoxid | 3 |
| EDENOR C 18 98-100 als Stearinsäure | 1 |
| VULKACIT® NZ/EGC als Beschleuniger | 1,6 |
| VULKANOX 4020/LG als Stabilisator | 2 |
| VULKANOX HS/LG als Stabilisator | 2 |
| ANTILUX 654 , Wachs | 2 |
| MAHLSCHWEFEL 90/95 CHANCEL, Schwefel | 1,6 |
| RHENOGRAN DPG-(80), Diphenylguanidin | 2,75 |
| VULKALENT E/C, Sulfonamid | 0,2 |

### III. Herstellung der Vulkanisate

Zur Herstellung der Vulkanisate wurden die Bestandteile wie folgt zugemischt und behandelt:

### 1. Mischstufe: 1,5 Liter Interlocking Kneter, Rotordrehzahl 60 upm, Starttemperatur 60°C

| | |
|---|---|
| 0 sec - | Zugabe aller Polymere |
| 30 sec - | Zugabe 2/3 Silica, 2/3 Silan, Russ, Öl, Stearinsäure, Wachse und Stabilisatoren |
| 90 sec - | Zugabe restliches Silica und Silan |
| 150 sec - | Zugabe Zinkoxid |
| 210 sec - | Fegen |
| 240 sec - | Erreichen der Temperatur von 150°C und Halten für 3 Minuten |
| 420 sec - | Auswurf |

Auf der kalten Walze zum Fell auswalzen, abkühlen lassen und minimal 8 Stunden lagern vor der 2. Stufe

### 2. Mischstufe: 1,5 Liter Interlocking Kneter, Rotordrehzahl 60 upm, Starttemperatur 60°C

| | |
|---|---|
| 0 sec - | Zugabe der gesamten Mischung der ersten Mischstufe |
| 120 sec - | Erreichen der Temperatur von 150°C und Halten von 150°C für 3 Minuten |
| 300 c - | Auswurf |

### 3. Mischstufe: Walze

Einmischen aller restlichen Vernetzungschemikalien auf einer Walze, wobei die Temperatur unter 110°C gehalten wird.

### IV. Vulkanisateigenschaften

Die Vulkanisateigenschaften der gemäß **Absatz III** hergestellten Mischungen sind aus Tabelle 5 ersichtlich.

**Tabelle 5: Vulkanisateigenschaften der Mischungen**

| | 1 | 2 | 3 | 4 | 5 | 6 | 7 | 8 | 9 | 10 |
|---|---|---|---|---|---|---|---|---|---|---|
| SSBR Typ | VSL 5025-2 | VSL 5025-2 | PBR 4088 | PBR 4088 | PBR 4070 | PBR 4070 | PBR 4078 | PBR 4078 | VSL 5025-0HM | VSL 5025-0HM |
| NdBR Typ | CB 24 | PBR 4065 | CB 24 | PBR 4065 | CB 24 | PBR 4065 | CB 24 | PBR 4065 | CB 22 | PBR 4076 |
| | | | | | | | | | | |
| Shore A Härte 23°C | 63 | 62 | 60 | 60 | 65 | 65 | 61 | 63 | 60 | 60 |
| Shore A Härte 60°C | 60 | 59 | 57 | 55 | | | 57 | 57 | 57 | 57 |
| Rebound 23°C (%) | 28 | 28 | 38 | 36 | 28 | 28 | 33 | 32 | 33 | 31 |
| Rebound 60°C (%) | 52 | 53 | 61 | 60 | 54 | 54 | 58 | 56 | 51 | 53 |
| G*(15%) @ 60°C (MPa) | 1,07 | 1,09 | 0,94 | 0,94 | 1,27 | 1,24 | 1,17 | 1,05 | 1,11 | 1,06 |
| tan δ (max) 60°C | 0,166 | 0,17 | 0,131 | 0,136 | 0,171 | 0,172 | 0,157 | 0,15 | 0,172 | 0,172 |
| Eplexor tan δ 60°C | 0,105 | 0,111 | 0,079 | 0,087 | 0,096 | 0,095 | 0,092 | 0,096 | 0,116 | 0,104 |
| Modulus 300% (MPa) (σ₃₀₀) | 12,8 | 11,8 | 14,6 | 13,5 | 13,7 | 13,8 | 11,8 | 10,6 | 11,4 | 11,8 |
| | | | | | | | | | | |
| Mooney Viskosität ML1+4@100°C | 66 | 58 | 68 | 64 | 87 | 81 | 75 | 69 | 73 | 66 |
| | | | | | | | | | | |

Die Messmethoden, die für die Bestimmung der in Tabelle 5 genannten Eigenschaften herangezogen wurden, sind im weiteren Verlauf unter angegeben.

Es zeigt sich, dass die dynamischen Eigenschaften der Vulkanisate unter Einsatz von PBR 4065 bzw. PBR 4076 und Vulkanisate mit CB 24 bzw. CB 22 annähernd gleich geblieben sind. Lediglich die Mooney Viskosität sind bei den Kautschuk-zusammensetzungen mit modifizierten Polybutadienen niedriger.

In **Tabelle 6** werden der Steifigkeitsindex (SI) und Rollwiderstandsindex (RRI) für die Beispiele 1-10 angegeben und sind ferner in Figur 2 grafisch aufgetragen.

**Tabelle 6: Steifigkeitsindex (SI) und Rollwiderstandsindex (RRI)**

| | **Mischungen/Vulkanisat basierend auf Komponente a)/Komponente b)** | **SI ¹** | **RRI ²** |
|---|---|---|---|
| 1 | VSL 5025-2/CB24 | 100 | 100 |
| 2 | VSL 5025-2/PBR 4065 | 92 | 94 |
| 3 | PBR 4088 / CB 24 | 95 | 198 |
| 4 | PBR 4088 / PBR 4065 | 88 | 170 |
| 5 | PBR 4070 / CB24 | 131 | 110 |
| 6 | PBR 4070 / PBR 4065 | 129 | 111 |
| 7 | PBR 4078 / CB 24 | 98 | 135 |
| 8 | PBR 4078 / PBR 4065 | 81 | 130 |
| 9 | VSL 5025-0HM / CB 22 | 88 | 86 |
| 10 | VSL 5025-0HM / PBR 4076 | 87 | 99 |

| | | | |
|---|---|---|---|
| 1: Der **Steifigkeitsindex SI** wird rechnerisch wie folgt ermittelt: **SI** = Shore A Härte 23°C x Zugfestigkeit S300 x G*(15%)@60°C (MPa) 2: Der **Rollwiderstandsindex (RRI)** wird rechnerisch wie folgt ermittelt: **RRI** = Rückprallelastizität @60°C / tan δ (max) @ 60°C / tan δ @ 60°C Eplexor | | | |

Für die vorgenannten Messungen wird die Mischung 1 bestehend aus VSL 5025-2 und CB 24 auf 100 normiert, da weder das SSBR noch das Polybutadien funktionalisiert bzw. modifiziert ist.

Aus Tabelle 6 und Figur 2 kann festgestellt werden, dass die Vulkanisate mit modifizierten Polybutadienen 2, 4, 6, 8, 10 immer niedrigere Steifigkeitsindices und niedrigere Rollwiderstandsindices aufweisen als die Vulkanisate ohne modifiziertes Polybutadien 1, 3, 5, 7, 9. Somit weisen die erfindungsgemäßen Vulkanisate nicht nur ein verbessertes Verarbeitungsverhalten (Steifigkeitsindex), sondern auch einen verbesserten Rollwiderstand auf.

### V. Angewandte Methoden/Din-Normen bei den Vulkanisatprüfungen

An den Vulkanisaten wurden die in Tabelle 5 aufgeführten Eigenschaften nach den im Folgenden genannten Normen bestimmt:

| | |
|---|---|
| **ASTM D1646-00** | (für Kautschukzusammensetzung): Mooneyviskosität und Mooney-Stress-Relaxation |
| **DIN 53505:** | Shore A-Härte bei 60°C |
| **DIN 53512:** | Rückprallelastizität bei 60°C |
| **DIN 53504:** | Spannungswerte bei 10%, 100%, und 300 % Dehnung (σ₁₀, σ₁₀₀, und σ₃₀₀) , Zugfestigkeit sowie Bruchdehnung |
| **DIN 53516:** | Abrieb |

### Bestimmung der dynamischen Eigenschaften (Temperaturabhängigkeit des Speichermoduls E' im Temperaturbereich -60°C bis 0°C sowie tan δ bei 60°C):

Für die Bestimmung der dynamischen Eigenschaften (Temperaturabhängigkeit des Speichermoduls E' im Temperaturbereich -60°C bis 0°C sowie tan δ bei 60°C) wurde ein Eplexor-Gerät (Eplexor 500 N) der Firma Gabo-Testanlagen GmbH, Ahlden, Deutschland eingesetzt. Die Messungen wurden nach DIN53513 bei 10 Hz an Aresstreifen im Temperaturbereich -100°C und +100°C bei einer Heizrate von 1K/min. ermittelt.

Mit der Methode wurden folgende Messgrößen erhalten, die nach ASTM 5992-96 bezeichnet werden:

| | |
|---|---|
| **E' (60°C):** | Speichermodul bei 60°C |
| **E' (23°C):** | Speichermodul bei 23°C |
| **E' (0°C):** | Speichermodul bei 0°C |

sowie

| | |
|---|---|
| **tan δ (60°C):** | Verlustfaktor (E"/E') bei 60°C |
| **tan δ (23°C):** | Verlustfaktor (E"/E') bei 23°C |
| **tan δ (0°C):** | Verlustfaktor (E"/E') bei 0°C. |

**E'** liefert ein Indiz für den Griff der Reifen-Lauffläche. Je niedriger E' ist, umso besser ist der Griff.

**Tan δ (60°C)** ist ein Maß für den Hystereseverlust beim Rollen des Reifens. Je niedriger tan δ (60°C) ist, umso niedriger ist der Rollwiderstand des Reifens.

**DIN 53513-1990:** Elastische Eigenschaften - Für die Bestimmung der elastischen Eigenschaften wurde ein MTS-Elastomer Test System (MTS Flex Test) der Firma MTS eingesetzt. Die Messungen wurden nach DIN53513-1990 an Cylinderproben (2 Proben mit je 20 x 6 mm) mit gesamt 2 mm Kompression bei einer Temperatur von 60°C und einer Messfrequenz von 1 Hz im Bereich des Amplitudensweeps von 0,1 bis 40% ermittelt

Mit der Methode wurden folgende Messgrößen erhalten, die nach ASTM 5992-96 bezeichnet werden:

| | |
|---|---|
| **G* (0,5%):** | dynamischer Modul bei 0,5% Amplitudensweep |
| **G* (15%):** | dynamischer Modul bei 15% Amplitudensweep |
| **G* (0,5%) - (15%):** | Differenz des dynamischen Moduls bei 0,5% zu 15 % Amplitudensweep |

sowie
**tan δ (max):** maximaler Verlustfaktor (G"/G') des gesamten Messbereiches bei 60°C.

**G* (0,5%)** - **(15%)** liefert ein Indiz für den Payne-Effekt der Mischung, wobei ein niedriger Wert eine gute Füllstoffverteilung und damit einen niedrigen Rollwiderstand anzeigt.

**Tan δ (max)** ist ein Maß für den Hystereseverlust beim Rollen des Reifens. Je niedriger tan δ (max) ist, umso niedriger ist der Rollwiderstand des Reifens.

### VI. Oberflächeneigenschaften der Extrudate

Des Weiteren wurde verschiedene Extrudate mittels eines Extruders (Brabender Plasticorders) bei 90°C, 100°C und 120°C bei einer Schneckengeschwindigkeit von 50 upm (Umdrehung pro Minute) gemäß ASTM D 2230 hergestellt. Je glatter die Ränder und Ecken des Extrudates ist, desto einfacher ist die Verarbeitbarkeit der Kautschukzusammensetzung.

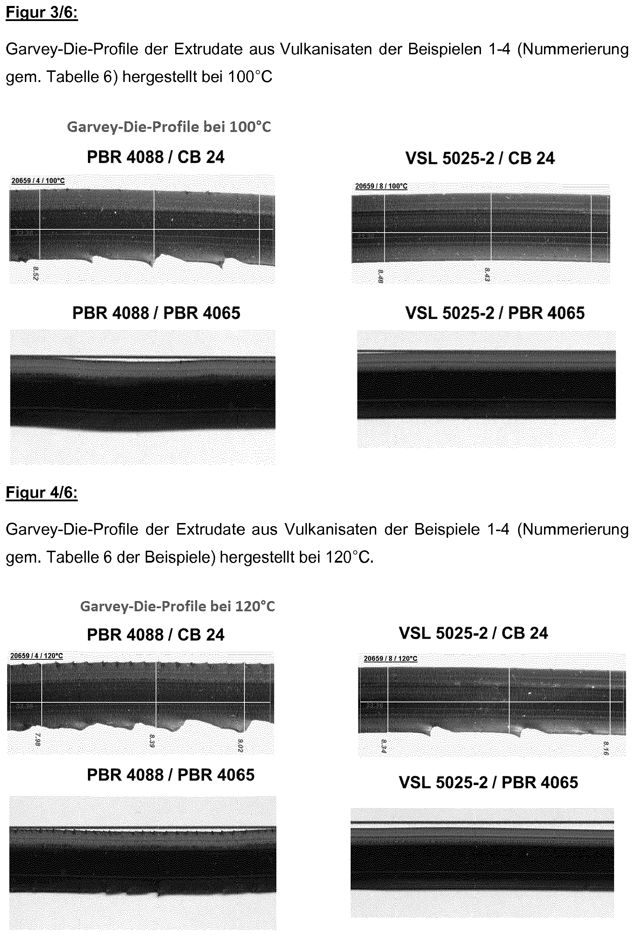

**Figur 3** zeigt **Garvey-Die-Profile** der Extrudate aus den Beispielen 1-4 (Nummerierung gemäß Tabelle 6 der Beispiele), hergestellt bei 100°C. Die Profile der Vulkanisate auf Basis von modifiziertem NdBR (PBR 4065) zeigen eine glattere Struktur als die Vergleichsextrudate auf Basis des unmodifizierten NdBR (CB 24), was auf ein verbessertes Verarbeitungsverhalten hindeutet.

**Figur 4** zeigt **Garvey-Die-Profile** der Extrduate aus den Beispielen 1-4 (Nummerierung gemäß Tabelle 6 der Beispiele), hergestellt bei 120°C. Auch hier zeigen die Profile der Vulkanisate auf Basis von modifiziertem NdBR (PBR 4065) eine glattere Oberflächenstruktur als die Vergleichsextrudate auf Basis des unmodifizierten NdBR (CB24).

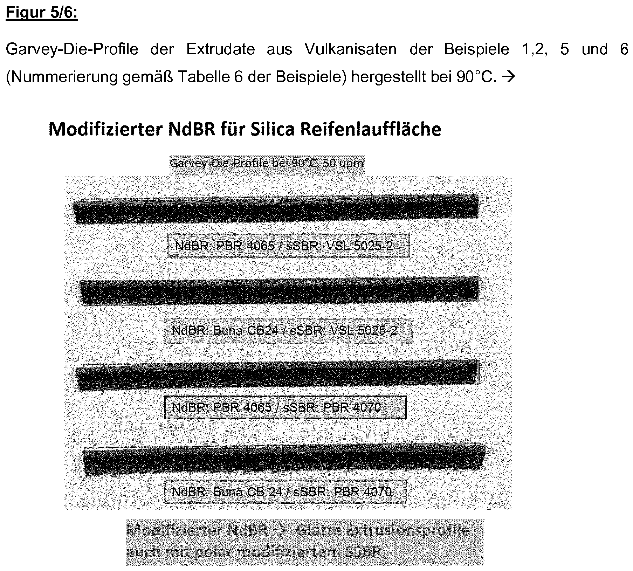

**Figur 5** zeigt verschiedene **Garvey-Die-Profile** von Extrudaten auf Basis der Vulkanisate 1, 2, 5 und 6 (Nummerierung gemäß Tabelle 6 der Beispiele) hergestellt bei 90°C.

Auch hier ist zu erkennen, dass die Vulkanisate auf Basis der erfindungsgemäßen Komponente b) (PBR 4065) eine glattere Struktur aufweisen als die Vulkanisate auf Basis einer nicht erfindungsgemäßen Komponente b) (Buna CB 24).

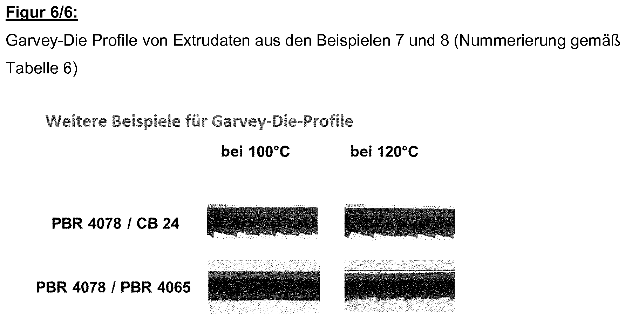

**Figur 6** zeigt verschiedene **Garvey-Die-Profile** von Extrudaten auf Basis der Vulkanisate 7 und 8 (Nummerierung gemäß Tabelle 6 der Beispiele) hergestellt bei 100 bzw. 120°C. Anhand der glatteren Struktur der Garvey Die Profile ist auch hier eine Verbesserung der Verarbeitbarkeit durch die Verwendung der erfindungsgemäßen Komponente b) in Form von modifiziertem NdBR PBR 4065 (anstelle von nicht erfindungsgemäßem Buna CB 24) in Kombination mit der erfindungsgemäßen Komponente a) in Form von endgruppen-funktionalisiertem SSBR PBR 4078 erkennbar.

## Patentansprüche

1. Vulkanisierbare Kautschukzusammensetzung enthaltend mindestens folgende Komponenten:
a) mindestens ein funktionalisiertes Polymer,
b) mindestens ein modifiziertes Polybutadien mit einem Anteil an cis-1,4-Einheiten von > 95 Gew.-% und einem 1,2-Vinyl-Gehalt von < 1 Gew.- %, wobei das Polybutadien nach der Polymerisation mittels Schwefelchloriden modifiziert ist,
c) mindestens eine Kieselsäure,
d) mindestens einen weiteren Füllstoff,
e) mindestens ein Vulkanisationsmittel,
f) mindestens ein Öl und
g) ggf. mindestens ein weiteres Kautschukadditiv, wobei
das modifizierte Polybutadien eine sprungartige Erhöhung der Mooney-Viskosität (ML 1+4 bei 100 °C) um mindestens 50%, bezogen auf die Mooney-Viskosität (ML 1+4 bei 100 °C) des Polybutadiens vor der Zugabe der Schwefelchloride, aufweist.

2. Vulkanisierbare Kautschukzusammensetzung nach Anspruch 1, **dadurch gekennzeichnet, dass** es sich bei dem funktionalisierten Polymer um funktionalisierte Dienpolymere oder durch Copolymerisation von Dienen mit vinylaromatischen Monomeren erhältliche Dien-Copolymere handelt.

3. Vulkanisierbare Kautschukzusammensetzung nach Anspruch 1, **dadurch gekennzeichnet, dass** das funktionalisierte Polymer ein Polybutadien, ein Polyisopren, ein Butadien-Isopren-Copolymer, ein Butadien-Styrol-Copolymer, ein Isopren-Styrol-Copolymer oder ein Butadien-Isopren-Styrol-Terpolymer ist.

4. Vulkanisierbare Kautschukzusammensetzung nach Anspruch 1, **dadurch gekennzeichnet, dass** es sich bei dem funktionalisierten Polymer um durch Lösungspolymerisation hergestellte endgruppenfunktionalisierte Butadien-Styrol-Copolymere handelt.

5. Vulkanisierbare Kautschukzusammensetzung nach Anspruch 4, **dadurch gekennzeichnet, dass** das endgruppenfunktionalisierte Butadien-Styrol-Copolymer Mooney-Viskositäten (ML 1+4 (100°C)) von 10 bis 200, vorzugsweise 30 bis 150 Mooney-Einheiten aufweist.

6. Vulkanisierbare Kautschukzusammensetzung nach Anspruch 5, **dadurch gekennzeichnet, dass** das endgruppenfunktionalisierte Butadien-Styrol-Copolymer mittlere Molgewichte (Zahlenmittel, Mₙ) von 10.000 bis 2.000.000 g/mol, bevorzugt von 100.000 bis 1.000.000 g/mol aufweist.

7. Vulkanisierbare Kautschukzusammensetzung nach Anspruch 6, **dadurch gekennzeichnet, dass** das endgruppenfunktionalisierte Butadien-Styrol-Copolymer Glasübergangstemperaturen von -110°C bis +20°C, bevorzugt -1 10°C bis 0°C aufweist.

8. Vulkanisierbare Kautschukzusammensetzung nach Anspruch 7, **dadurch gekennzeichnet, dass** das modifizierte Polybutadien durch Lösungspolymerisation in Gegenwart mindestens eines inerten, organischen Lösungsmittels und in Gegenwart von mindestens einem Katalysator auf Basis von Neodymverbindungen in einem Temperaturbereich von -20°C bis 150°C polymerisiert, die Polymerisation durch Zugabe von protischen Verbindungen gestoppt und das Polymerisat mittels Schwefelchloriden modifiziert wird.

9. Vulkanisierbare Kautschukzusammensetzung nach Anspruch 8, **dadurch gekennzeichnet, dass** die Schwefelchloride vor der Zugabe mit einer Carbonsäure, Fettsäure und/oder Fettsäureester behandelt werden.

10. Vulkanisierbare Kautschukzusammensetzung nach Anspruch 9, **dadurch gekennzeichnet, dass** es sich bei den Schwefelchloriden um Dischwefeldichlorid, Schwefelchlorid, Schwefelbromid, Schwefeldichlorid, Thionylchlorid, Dischwefeldibromid und/oder Thionylbromid handelt.

11. Vulkanisierbare Kautschukzusammensetzung nach Anspruch 1, **dadurch gekennzeichnet, dass** das modifizierte Polybutadien nach der Polymerisation eine Mooney-Viskosität (ML 1+4 bei 100 °C) (Ausgangsmooney-Viskosität) von mindestens 20 MU, bevorzugt 20 - 25 MU, besonders bevorzugt mindestens 40 MU aufweist und nach der Zugabe von Schwefelchloriden eine Mooney-Viskosität (ML 1+4 bei 100 °C) (Endmooney-Viskosität) von mindestens 30 MU, bevorzugt 40 - 50 MU, besonders bevorzugt 60 -80 MU aufweist, wobei der Gelgehalt kleiner als 1 Gew.-% beträgt.

12. Vulkanisierbare Kautschukzusammensetzung nach einem der vorgenannten Ansprüche 1 - 11 enthaltend
a) 50 bis 90 Gew.-Teile, vorzugsweise 60 bis 70 Gew.-Teile von mindestens einem funktionalisierten Lösungs-Butadien-Styrol- Copolymer (SSBR) (ölfrei) mit einer Glasübergangstemperatur (Tg) zwischen -110°C bis +20°C bezogen auf das ölfreie SSBR,
b) 10 - 50 Gew.-Teile, vorzugsweise 20 bis 40 Gew.-Teile von mindestens einem modifizierten Neodymkatalysierten Polybutadien (NdBR) mit einer Mooneyviskosität (ML 1+4 bei 100 °C) von mindestens 30 MU,
c) 50 - 120 Gew.-Teile, vorzugsweise 60 - 100 Gew.-Teile von mindestens einer Kieselsäure,
d) 2 - 25 Gew.-Teile, vorzugsweise 5 - 10 Gew.-Teile von mindestens einem weiteren Füllstoff,
e) 1 - 5 Gew.-Teile, vorzugsweise 2 - 4 Gew.-Teile von mindestens einem Vulkanisationsmittel,
f) 5 - 50 Gew.-Teile, vorzugsweise 10 - 40 Gew.Teile von mindestens einem Öl,
g) ggf. 1 - 7 Gew.-Teile, vorzugsweise 2 - 5 Gew.-Teile von mindestens einem Kautschukadditiv,
wobei die Gew. Teil Angaben der Komponenten c) - g) jeweils bezogen auf 100 Gewichtsteile Kautschuk (Summe aus a) und b)) sind.

13. Vulkanisierbare Kautschukzusammensetzung nach Anspruch 12, **dadurch gekennzeichnet, dass** es sich bei dem weiteren Füllstoff um Ruß handelt.

14. Verfahren zur Herstellung von vulkanisierbaren Kautschukzusammensetzungen nach einem der Ansprüche 1 bis 13, **dadurch gekennzeichnet, dass** man die Komponenten a) bis f) und optional g) in einer oder mehreren Stufen miteinander mischt, bevorzugt entweder durch einen dreistufigen Mischprozess mit zwei Mischstufen in einem Innenmischer und einer abschließenden Mischstufe auf einer Walze, oder durch einen zweistufigen Mischprozess, bei dem die 1. Mischstufe in einem Innenmischer und die 2. Mischstufe auf einer Walze erfolgt, oder durch einen zweistufigen Mischprozess, bei dem beide Mischstufen in einem Innenmischer erfolgen, wobei die Mischung vor Zugabe derjenigen Komponenten, die bei dreistufigem Mischprozess auf der Walze zugegeben werden, auf Temperaturen < 120°C, vorzugsweise < 110°C abgekühlt wird.

15. Verfahren zur Herstellung von Vulkanisaten, **dadurch gekennzeichnet, dass** man vulkanisierbare Kautschukzusammensetzungen nach einem der Ansprüche 1 bis 14 einer Vernetzungsreaktion unterwirft, bevorzugt bei einer Temperatur im Bereich von 100 bis 250°C, insbesondere von 130 bis 180°C, unter einem Druck im Bereich von 1 bis 200 bar.

16. Verfahren nach Anspruch 15, **dadurch gekennzeichnet, dass** die Vernetzung im Rahmen eines Formgebungsprozesses stattfindet.

17. Vulkanisate erhältlich durch das Verfahren nach einem der Ansprüche 14 bis 16.

18. Verwendung von vulkanisierbaren Kautschukzusammensetzung nach einem der Ansprüche 1 bis 13 zur Herstellung von Luftreifen, insbesondere Winterreifen, Reifenbauteilen, insbesondere Reifenlaufflächen, Subtreads, Karkassen, Seitenwänden, verstärkten Seitenwänden für Notlaufreifen und Apexmischungen sowie für die Herstellung von technischen Gummiartikeln, bevorzugt Dämpfungselementen, Walzenbelägen, Belägen von Förderbändern, Riemen, Spinnkopsen, Dichtungen, Golfballkernen und Schuhsohlen.

## Claims

1. Vulcanizable rubber composition comprising at least the following components:
a) at least one functionalized polymer,
b) at least one modified polybutadiene having a proportion of cis-1,4 units of > 95% by weight and a 1,2-vinyl content of < 1% by weight, the polybutadiene having been modified by means of sulphur chlorides after the polymerization,
c) at least one silica,
d) at least one further filler,
e) at least one vulcanizing agent,
f) at least one oil and
g) optionally at least one further rubber additive, where
the modified polybutadiene has an abrupt increase in the Mooney viscosity (ML 1+4 at 100°C) by at least 50%, based on the Mooney viscosity (ML 1+4 at 100°C) of the polybutadiene prior to addition of the sulphur chlorides.

2. Vulcanizable rubber composition according to Claim 1, **characterized in that** the functionalized polymer comprises functionalized diene polymers, or diene copolymers obtainable by copolymerization of dienes with vinylaromatic monomers.

3. Vulcanizable rubber composition according to Claim 1, **characterized in that** the functionalized polymer is a polybutadiene, a polyisoprene, a butadiene-isoprene copolymer, a butadiene-styrene copolymer, an isoprene-styrene copolymer or a butadiene-isoprene-styrene terpolymer.

4. Vulcanizable rubber composition according to Claim 1, **characterized in that** the functionalized polymer comprises end group-functionalized butadiene-styrene copolymers prepared by solution polymerization.

5. Vulcanizable rubber composition according to Claim 4, **characterized in that** the end group-functionalized butadiene-styrene copolymer has Mooney viscosities (ML 1+4 (100°C)) of 10 to 200, preferably 30 to 150 Mooney units.

6. Vulcanizable rubber composition according to Claim 5, **characterized in that** the end group-functionalized butadiene-styrene copolymer has mean molar masses (number-average, Mn) of 10 000 to 2 000 000 g/mol, preferably of 100 000 to 1 000 000 g/mol.

7. Vulcanizable rubber composition according to Claim 6, **characterized in that** the end group-functionalized butadiene-styrene copolymer has a glass transition temperatures of -110°C to +20°C, preferably -110°C to 0°C.

8. Vulcanizable rubber composition according to Claim 7, **characterized in that** the modified polybutadiene is polymerized by solution polymerization in the presence of at least one inert organic solvent and in the presence of at least one catalyst based on neodymium compounds within a temperature range from -20°C to 150°C, the polymerization is stopped by adding protic compounds and the polymer is modified by means of sulphur chlorides.

9. Vulcanizable rubber composition according to Claim 8, **characterized in that** the sulphur chlorides, prior to addition, are treated with a carboxylic acid, fatty acid and/or fatty acid ester.

10. Vulcanizable rubber composition according to Claim 9, **characterized in that** the sulphur chlorides are disulphur dichloride, sulphur chloride, sulphur bromide, sulphur dichloride, thionyl chloride, disulphur dibromide and/or thionyl bromide.

11. Vulcanizable rubber composition according to Claim 1, **characterized in that** the modified polybutadiene after the polymerization has a Mooney viscosity (ML 1+4 at 100°C) (starting Mooney viscosity) of at least 20 MU, preferably 20-25 MU, more preferably at least 40 MU, and after the addition of sulphur chlorides has a Mooney viscosity (ML 1+4 at 100°C) (final Mooney viscosity) of at least 30 MU, preferably 40-50 MU, more preferably 60-80 MU, where the gel content is less than 1% by weight.

12. Vulcanizable rubber composition according to any of the preceding Claims 1-11, comprising
a) 50 to 90 parts by weight, preferably 60 to 70 parts by weight, of at least one functionalized solution butadiene-styrene copolymer (SSBR) (oil-free) having a glass transition temperature (Tg) between -110°C to +20°C, based on the oil-free SSBR,
b) 10-50 parts by weight, preferably 20 to 40 parts by weight, of at least one modified neodymium-catalysed polybutadiene (NdBR) having a Mooney viscosity (ML 1+4 at 100°C) of at least 30 MU,
c) 50-120 parts by weight, preferably 60-100 parts by weight, of at least one silica,
d) 2-25 parts by weight, preferably 5-10 parts by weight, of at least one further filler,
e) 1-5 parts by weight, preferably 2-4 parts by weight, of at least one vulcanizing agent,
f) 5-50 parts by weight, preferably 10-40 parts by weight, of at least one oil,
g) optionally 1-7 parts by weight, preferably 2-5 parts by weight, of at least one rubber additive,
where the parts by weight figures for components c)-g) are each based on 100 parts by weight of rubber (sum total of a) and b)).

13. Vulcanizable rubber composition according to Claim 12, **characterized in that** the further filler is carbon black.

14. Process for producing vulcanizable rubber compositions according to any of Claims 1 to 13, **characterized in that** components a) to f) and optionally g) are mixed with one another in one or more stages, preferably either by a three-stage mixing operation with two mixing stages in an internal mixer and a final mixing stage on a roller, or by a two-stage mixing operation in which the 1st mixing stage is effected in an internal mixer and the 2nd mixing stage on a roller, or by a two-stage mixing operation in which both mixing stages are effected in an internal mixer, with cooling of the mixture to temperatures of < 120°C, preferably < 110°C, prior to addition of those components which are added on the roller in a three-stage mixing operation.

15. Process for producing vulcanizates, **characterized in that** vulcanizable rubber compositions according to any of Claims 1 to 14 are subjected to a crosslinking reaction, preferably at a temperature in the range from 100 to 250°C, especially from 130 to 180°C, under a pressure in the range from 1 to 200 bar.

16. Process according to Claim 15, **characterized in that** the crosslinking takes place in the course of a shaping operation.

17. Vulcanizates obtainable by the process according to any of Claims 14 to 16.

18. Use of vulcanizable rubber composition according to any of Claims 1 to 13 for production of pneumatic tyres, especially winter tyres, tyre components, especially tyre treads, subtreads, carcasses, sidewalls, reinforced sidewalls for runflat tyres and apex mixtures, and for the production of industrial rubber articles, preferably damping elements, roll coverings, conveyor belt coverings, drive belts, spinning cops, seals, golfball cores and shoe soles.

## Revendications

1. Composition de caoutchouc vulcanisable contenant au moins les composants suivants :
a) au moins un polymère fonctionnalisé,
b) au moins un polybutadiène modifié ayant une proportion d'unités cis-1,4 > 95 % en poids et une teneur en 1,2-vinyle < 1 % en poids, le polybutadiène étant modifié après la polymérisation au moyen de chlorures de soufre,
c) au moins une silice,
d) au moins une charge supplémentaire,
e) au moins un agent de vulcanisation,
f) au moins une huile et
g) éventuellement au moins un additif de caoutchouc supplémentaire,
le polybutadiène modifié présentant une élévation soudaine de la viscosité de Mooney (ML 1+4 à 100 °C) d'au moins 50 %, par rapport à la viscosité de Mooney (ML 1+4 à 100 °C) du polybutadiène avant l'ajout des chlorures de soufre.

2. Composition de caoutchouc vulcanisable selon la revendication 1, **caractérisée en ce que** le polymère fonctionnalisé consiste en des polymères de diènes fonctionnalisés ou des copolymères de diènes pouvant être obtenus par copolymérisation de diènes avec des monomères aromatiques de vinyle.

3. Composition de caoutchouc vulcanisable selon la revendication 1, **caractérisée en ce que** le polymère fonctionnalisé est un polybutadiène, un polyisoprène, un copolymère de butadiène-isoprène, un copolymère de butadiène-styrène, un copolymère d'isoprène-styrène ou un terpolymère de butadiène-isoprène-styrène.

4. Composition de caoutchouc vulcanisable selon la revendication 1, **caractérisée en ce que** le polymère fonctionnalisé consiste en des copolymères de butadiène-styrène fonctionnalisés par des groupes terminaux fabriqués par polymérisation en solution.

5. Composition de caoutchouc vulcanisable selon la revendication 4, **caractérisée en ce que** le copolymère de butadiène-styrène fonctionnalisé par des groupes terminaux présente des viscosités de Mooney (ML 1+4 (100 °C)) de 10 à 200, de préférence de 30 à 150 unités Mooney.

6. Composition de caoutchouc vulcanisable selon la revendication 5, **caractérisée en ce que** le copolymère de butadiène-styrène fonctionnalisé par des groupes terminaux présente des poids moléculaires moyens (moyenne en nombre, Mₙ) de 10 000 à 2 000 000 g/mol, de préférence de 100 000 à 1 000 000 g/mol.

7. Composition de caoutchouc vulcanisable selon la revendication 6, **caractérisée en ce que** le copolymère de butadiène-styrène fonctionnalisé par des groupes terminaux présente des températures de transition vitreuse de -110 °C à +20 °C, de préférence de -110 °C à 0 °C.

8. Composition de caoutchouc vulcanisable selon la revendication 7, **caractérisée en ce que** le polybutadiène modifié est polymérisé par polymérisation en solution en présence d'au moins un solvant organique inerte et en présence d'au moins un catalyseur à base de composés de néodyme dans une plage de températures allant de -20 °C à 150 °C, la polymérisation étant arrêtée par ajout de composés protiques et le polymère étant modifié au moyen de chlorures de soufre.

9. Composition de caoutchouc vulcanisable selon la revendication 8, **caractérisée en ce que** les chlorures de soufre sont traités avec un acide carboxylique, un acide gras et/ou un ester d'acide gras avant l'ajout.

10. Composition de caoutchouc vulcanisable selon la revendication 9, **caractérisée en ce que** les chlorures de soufre sont le dichlorure de disoufre, le chlorure de soufre, le bromure de soufre, le dichlorure de soufre, le chlorure de thionyle, le dibromure de disoufre et/ou le bromure de thionyle.

11. Composition de caoutchouc vulcanisable selon la revendication 1, **caractérisée en ce que** le polybutadiène modifié présente après la polymérisation une viscosité de Mooney (ML 1+4 à 100 °C) (viscosité de Mooney initiale) d'au moins 20 UM, de préférence de 20 à 25 UM, de manière particulièrement préférée d'au moins 40 UM, et, après l'ajout de chlorures de soufre, une viscosité de Mooney (ML 1+4 à 100 °C) (viscosité de Mooney finale) d'au moins 30 UM, de préférence de 40 à 50 UM, de manière particulièrement préférée de 60 à 80 UM, la teneur en gel étant inférieure à 1 % en poids.

12. Composition de caoutchouc vulcanisable selon l'une quelconque des revendications 1 à 11 précédentes, contenant :
a) 50 à 90 parties en poids, de préférence 60 à 70 parties en poids, d'au moins un copolymère de butadiène-styrène en solution (SSBR) fonctionnalisé (sans huile) ayant une température de transition vitreuse (Tg) comprise entre -110 °C et +20 °C, par rapport au SSBR sans huile,
b) 10 à 50 parties en poids, de préférence 20 à 40 parties en poids, d'au moins un polybutadiène modifié catalysé par du néodyme (NdBR) ayant une viscosité de Mooney (ML 1+4 à 100 °C) d'au moins 30 UM,
c) 50 à 120 parties en poids, de préférence 60 à 100 parties en poids, d'au moins une silice,
d) 2 à 25 parties en poids, de préférence 5 à 10 parties en poids, d'au moins une charge supplémentaire,
e) 1 à 5 parties en poids, de préférence 2 à 4 parties en poids, d'au moins un agent de vulcanisation,
f) 5 à 50 parties en poids, de préférence 10 à 40 parties en poids, d'au moins une huile,
g) éventuellement 1 à 7 parties en poids, de préférence 2 à 5 parties en poids, d'au moins un additif de caoutchouc,
les données de parties en poids des composants c) à g) se rapportant à chaque fois à 100 parties en poids de caoutchouc (somme de a) et b)).

13. Composition de caoutchouc vulcanisable selon la revendication 12, **caractérisée en ce que** la charge supplémentaire est du noir de carbone.

14. Procédé de fabrication de compositions de caoutchouc vulcanisables selon l'une quelconque des revendications 1 à 13, **caractérisé en ce que** les composants a) à f) et éventuellement g) sont mélangés les uns avec les autres en une ou plusieurs étapes, de préférence soit par un procédé de mélange à trois étapes avec deux étapes de mélange dans un mélangeur interne et une étape de mélange finale sur un cylindre, soit par un procédé de mélange à deux étapes, selon lequel la première étape de mélange a lieu dans un mélange interne et la deuxième étape de mélange sur un cylindre, soit par un procédé de mélange à deux étapes, selon lequel les deux étapes de mélange ont lieu dans un mélangeur interne, le mélange étant refroidi à des températures < 120 °C, de préférence < 110 °C, avant l'ajout des composants qui sont ajoutés sur le cylindre lors d'un procédé de mélange à trois étapes.

15. Procédé de fabrication de vulcanisats, **caractérisé en ce que** des compositions de caoutchouc vulcanisables selon l'une quelconque des revendications 1 à 14 sont soumises à une réaction de réticulation, de préférence à une température dans la plage allant de 100 à 250 °C, notamment de 130 à 180 °C, sous une pression dans la plage allant de 1 à 200 bar.

16. Procédé selon la revendication 15, **caractérisé en ce que** la réticulation a lieu dans le cadre d'un procédé de façonnage.

17. Vulcanisats pouvant être obtenus par le procédé selon l'une quelconque des revendications 14 à 16.

18. Utilisation de compositions de caoutchouc vulcanisables selon l'une quelconque des revendications 1 à 13 pour la fabrication de pneumatiques, notamment de pneus d'hiver, de composants de pneus, notamment de bandes de roulement de pneus, de sous-protecteurs, de carcasses, de parois latérales, de parois latérales renforcées pour pneus de roulage à plat et de mélanges d'apex, ainsi que pour la fabrication d'articles techniques en caoutchouc, de préférence d'éléments d'amortissement, de revêtements de cylindres, de revêtements de bandes de transport, de courroies, de cops de filage, de joints d'étanchéité, de noyaux de balles de golf et de semelles de chaussures.
